# EUROPÄISCHE PATENTSCHRIFT

(11) **EP 1 843 660 B1**
(45) Veröffentlichungstag und Bekanntmachung des Hinweises auf die Patenterteilung: **13.04.2016**
(21) Anmeldenummer: 06706259.6
(22) Anmeldetag: 17.01.2006
(51) Int. Cl.: A01N 43/38, A01N 47/06, A01N 25/00

(54) **VERWENDUNG VON TETRAMSÄUREDERIVATEN ZUR BEKÄMPFUNG VON INSEKTEN AUS DER GATTUNG DER PFLANZENLÄUSE (STERNORRHYNCHA)**
USE OF TETRAMIC ACID DERIVATIVES FOR THE CONTROL OF INSECTS OF THE PLANT LOUSE SPECIES (STERNORRHYNCHA)
UTILISATION DE DERIVES D'ACIDE TETRAMIQUE POUR LUTTER CONTRE DES INSECTES FAISANT PARTIE DES PUCERONS (STERNORRHYNCHA)

(30) Priorität: 22.01.2005 DE 102005003076
(43) Veröffentlichungstag der Anmeldung: 17.10.2007
(73) Patentinhaber: Bayer Intellectual Property GmbH, 40789 Monheim am Rhein (DE)
(72) Erfinder: FISCHER, Reiner, 40789 Monheim (DE); HUNGENBERG, Heike, 40764 Langenfeld (DE); BRÜCK, Ernst, 51467 Bergisch Gladbach (DE); NAUEN, Ralf, 40764 Langenfeld (DE); THIELERT, Wolfgang, 51519 Odenthal (DE); VAN WAETERMEULEN, Xavier, Alain, Marie, 40472 Düsseldorf (DE)
(74) Vertreter: BIP Patents
(86) Internationale Anmeldenummer: PCT/EP2006/000356
(87) Internationale Veröffentlichungsnummer: WO 2006/077071

(56) Entgegenhaltungen:
- WO-A-02/00025
- WO-A-97/36868
- WO-A-2004/065366
- WO-A-2004/080962
- WO-A2-02/48321
- D.S. HILL: "AGRICULTURAL ENTOMOLOGY" 1994, TIMBER PRESS , PORTLAND, OREGON, US , XP002405749 Seiten 153 - 210

## Beschreibung

Die vorliegende Erfindung betrifft die Verwendung der Verbindung der Formel (I) zur Bekämpfung von Insekten aus der Unterordnung der Pflanzenläuse (Sternorrhyncha).

Tetramsäurederivate sind bekannt aus EP-A-456 063, EP-A-521 334, EP-A-596 298, EP-A-613 884, WO 95/01 997, WO 95/26 954, WO 95/20 572, EP-A-0 668 267, WO 96/25 395, WO 96/35 664, WO 97/01 535, WO 97/02 243, WO 97/36 868, WO 97/43 275, WO 98/05638, WO 98/06721, WO 98/25928, WO 99/16748, WO 99/24437, WO 99/43649, WO 99/48869 und WO 99/55673, WO 01/09092, WO 01/17972, WO 01/23354, WO 01/74770, WO 03/013249, WO 2004/007 448, WO 2004/024 688, WO 04/065 366, WO 04/080 962, WO 04/111 042, WO 05/044 791, WO 05/044 796, WO 05/048 710, WO 05/049 596, WO 05/066 125.

Die insektizide Wirkung einiger dieser Verbindungen gegen die Arten Myzus persicae und Aphis gossypii aus der Familie der Röhrenläuse (Aphididae) in Gemüsekulturen wie z.B. Kohlgemüse und Baumwolle ist bekannt. Auch die Wirkung gegen die Mottenschildlaus Bemisia tabaci (Aleyrodidae) an Baumwolle wird beschrieben.

Überraschenderweise wird nun gefunden, dass Tetramsäurederivate auch besonders gut zur Bekämpfung weiterer tierischer Schädlinge aus der Unterordnung der Pflanzenläuse, speziell aus den Familien der Blasenläuse (Pemphigidae), Wurzelläuse (Phylloxeridae), Blattflöhe (Psyllidae), Napfschildläuse (Coccidae), Deckelschildläuse (Diaspididae), Röhrenschildläuse (Ortheziidae) sowie Schmier- und Wollläuse (Pseudococcidae) geeignet sind.

Weiterhin wird gefunden, dass Tetramsäurederivate auch gegen Mottenschildläuse (Aleyrodidae) in weiteren einjährigen Kulturen wie Gemüse, Baumwolle, Melonen, Kartoffeln, Tabak und überraschend auch in mehrjährigen Kulturen wie z.B. Zitrus, Beerenfrüchte aber auch Zierpflanzen und Gewürzen eine hervorragende Wirkung zeigen.

Außerdem wird gefunden, dass Tetramsäurederivate auch gegen Röhrenläuse (Aphididae) in weiteren einjährigen Kulturen wie Kartoffeln, Tabak, Melonen, Rüben, Raps, Getreide, Fruchtgemüse, Knollengemüse, Blattgemüse, Kohlgemüse, Wurzelgemüse, Stängelgemüse, Zwiebelgemüse, Blütenstände als Gemüse und überraschend auch in mehrjährigen Kulturen wie beispielsweise Zitrus, Kern- und Steinobst, Nüssen, Mandeln, Beerenfrüchten, Wein und Hopfen sowie tropischen Kulturen, Zierpflanzen und Gewürzen eine sehr gute Wirkung zeigen.

Die vorliegende Erfindung betrifft demnach die Verwendung der Verbindung der Formel (I) zur Bekämpfung von Insekten aus den Familien a) der Blasenläuse (Pemphigidae), Wurzelläuse (Phylloxeridae), Blattflöhe (Psyllidae), Napfschildläuse (Coccidae), Deckelschildläuse (Diaspididae), Röhrenschildläuse (Ortheziidae) sowie Schmier- und Wollläuse (Pseudococcidae) in ein- und mehrjährigen sowie tropischen Kulturen sowie b) zur Bekämpfung von Schädlingen aus der Familie der Mottenschildläuse (Aleyrodidae) in weiteren einjährigen Kulturen wie Gemüse, Kartoffeln, Tabak, Melonen, Baumwolle und überraschend auch in mehrjährigen Kulturen wie z.B. Zitrus, Beerenfrüchten, aber auch Zierpflanzen und Gewürzen und in tropischen Kulturen und c) zur Bekämpfung von Insekten aus der Familie der Röhrenläuse (Aphididae) in weiteren einjährigen Kulturen wie Kartoffeln, Tabak, Melonen, Rüben, Raps, Getreide, Fruchtgemüse, Knollengemüse, Blattgemüse, Kohlgemüse, Wurzelgemüse, Stängelgemüse, Zwiebelgemüse, Blütenstände als Gemüse und überraschend auch in mehrjährigen Kulturen wie beispielsweise Zitrus, Kern- und Steinobst, Nüssen, Mandeln, Beerenfrüchten, Wein und Hopfen sowie tropischen Kulturen, Zierpflanzen und Gewürzen.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken, Mais;
aber auch Blattgemüse, beispielsweise Kopfsalat, Chicoree, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl.

So versteht man hinsichtlich der Anwendung in Getreidekulturen beispielsweise Weizen, Gerste, Roggen, Hafer, Triticale aber auch Mais, Hirse und Reis;
hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse, darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Erfindungsgemäss wird die in der folgenden Tabelle genannte Beispielsverbindung I-4 der Formel (I), verwendet:

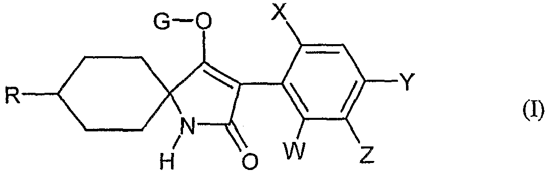

| **Beispiel-Nr.** | **W** | **X** | **Y** | **Z** | **R** | **G** | **Fp.°C** |
|---|---|---|---|---|---|---|---|
| I-1 | H | Br | H | CH₃ | OCH₃ | CO-i-C₃H₇ | 122 |
| I-2 | H | Br | H | CH₃ | OCH₃ | CO₂-C₂H₅ | 140 - 142 |
| I-3 | H | CH₃ | H | CH₃ | OCH₃ | H | > 220 |
| I-4 | H | CH₃ | H | CH₃ | OCH₃ | CO₂-C₂H₅ | 128 |
| I-5 | CH₃ | CH₃ | H | Br | OCH₃ | H | > 220 |
| I-6 | CH₃ | CH₃ | H | Cl | OCH₃ | H | 219 |
| I-7 | H | Br | CH₃ | CH₃ | OCH₃ | CO-i-C₃H₇ | 217 |
| I-8 | H | CH₃ | Cl | CH₃ | OCH₃ | CO₂C₂H₅ | 162 |
| I-9 | CH₃ | CH₃ | CH₃ | CH₃ | OCH₃ | H | >220 |
| I-10 | CH₃ | CH₃ | H | Br | OC₂H₅ | CO-i-C₃H₇ | 212-214 |
| I-11 | H | CH₃ | CH₃ | CH₃ | OC₂H₅ | CO-n-C₃H₇ | 134 |
| I-12 | H | CH₃ | CH₃ | CH₃ | OC₂H₅ | CO-i-C₃H₇ | 108 |
| I-13 | H | CH₃ | CH₃ | CH₃ | OC₂H₅ | CO-c-C₃H₅ | 163 |

in Form ihrer cis/trans-Isomerengemische oder ihrer reinen cis-Isomeren.

Die Verbindungen der Formel (I) sind bekannte Verbindungen, deren Herstellung in den Patenten/Patentanmeldungen, die auf Seite 1 zitiert sind, beschrieben sind (siehe vor allem WO 97/01 535, WO 97/36 868, WO 98/05 638).

Bevorzugt sind aus der Familie der Blasenläuse (Phemphigidae): Eriosoma spp., Pemphigus spp., Anuraphis spp., in Kulturen wie z.B. Zitrus, Kernobst, Steinobst, Gemüse, Rüben, Getreide und Zierpflanzen.

Bevorzugt sind aus der Familie der Wurzelläuse (Phylloxeridae): Phylloxera spp. in Wein, Nüssen, Zitrus.

Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle und tropischen Kulturen sowie Bemisia tabaci in Kulturen wie z.B. Gemüse, Melonen, Beerenfrüchten, Tabak, Zitrus, Zierpflanzen, Kartoffeln und tropischen Kulturen.

Außerdem bevorzugt sind aus der Familie der Röhrenläuse (Aphidae):

| | |
|---|---|
| Myzus spp. | in Tabak, Getreide, Steinobst, Beerenfrüchten, Fruchtgemüse, Blattgemüse, Knollen- und Wurzelgemüse, Melonen, Kartoffeln, Rüben, Raps, Zierpflanzen, |
| Aphis spp. | in Tabak, Zitrus, Kernobst, Steinobst, Getreide, Melonen, Rüben, Beerenfrüchten, Raps, Fruchtgemüse, Blattgemüse, Kohlgemüse, Knollen- und Wurzelgemüse, Zierpflanzen, Kartoffeln, Kürbisse |
| Rhodobium porosum | in Erdbeeren, |
| Nasonovia ribisnigri | in Blattgemüse, |
| Dysaphis spp. | in Kernobst, |
| Macrosiphum spp. | in Zierpflanzen, Getreide, Kartoffeln, Blatt-, Kohl- und Fruchtgemüse, Erdbeeren |
| Rhopalosiphum padi, | Sitobion avenae, Methopolophium dirhodum, Brachycolus noxius in Getreide, |
| Phorodon humuli | in Hopfen, |
| Brachycaudus helychrisii | in Steinobst, wie z.B. Pflaumen, |
| Toxoptera spp. | in Zitrus, Steinobst, Mandeln, Nüssen, Getreide, Gewürzen, |
| Aulacorthum spp. | in Zitrus, Kartoffeln, Frucht- und Blattgemüse. |

Ganz besonders bevorzugt ist die Bekämpfung folgender Arten aus der Familie der Blasenläuse (Pemphigidae) in folgenden Kulturen bevorzugt nach Blattapplikation:

| | |
|---|---|
| Eriosoma lanigerum | in Kernobst und Steinobst wie z.B. Äpfeln, Birnen, Kirschen, Pflaumen, Zwetschgen, |
| Eriosoma pyricola | in Kernobst wie Äpfeln und Birnen |

Pemphigus fuscicornis, Pemphigus bursarius in Rüben, Gemüse, Zierpflanzen

| | |
|---|---|
| Anuraphis cardui | in Gemüse wie z.B. Artischocken. |

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflänzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Der Wirkstoff der Formel (I) kann in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

### Anwendungsbeispiele

### Blasenläuse (Pemphigidae)

Ganz besonders bevorzugt ist die Bekämpfung folgender Arten aus der Familie der Blasenläuse (Pemphigidae):
Eriosoma lanigerum in Kernobst, wie z.B. Äpfeln, Birnen und Steinobst wie z.B. Kirschen, Pflaumen, Zwetschgen,
Eriosoma pyricola in Kernobst wie z.B. Äpfeln und Birnen
Pemphigus bursarius, in Zierpflanzen, wie z.B. Chrysanthemen, in Gemüse wie z.B. Kopfsalat
Pemphigus fuscicornis in Rüben, Blattgemüse, wie z.B. Kopfsalat, Wurzelgemüse wie z.B. Möhren, Zierpflanzen wie z.B. Chrysanthemen
Anuraphis cardui in Gemüse wie z.B. Artischocken

### Beispiel 1

Je 2 etwa 23 Jahre alte Apfelbäume der Sorte "Idared", die mit Eriosoma lanigerum befallen sind, werden unter Praxisbedingungen mit Beispiel (I-9) (Vergleichsbeispiel, nicht unter den Umfang der Erfindung fallend) (240 SC) und Beispiel (I-4) (240 SC) im Vergleich zu dem kommerziellen Standard Imidacloprid 200 SL in den angegebenen Aufwandmengen behandelt. Die Applikation erfolgt mit einer motorgetriebenen Rückenspritze. Die Wasseraufwandmenge beträgt 1500 l/ha.

Die Auswertung erfolgt 15 und 37 Tage nach der Anwendung, indem man die Abtötung in Prozent auf den Zweigen bonitiert.

| Wirkstoff | Aufwandmenge a.i. in % | Abtötung (%) | |
|---|---|---|---|
| | | 15 d | 37 d |
| Imidacloprid | 0,01 | 97 | 100 |
| Beispiel (I-9) | 0,0144 | 99 | 100 |
| Beispiel (I-4) | 0,0144 | 100 | 99 |

### Beispiel 2

Je 10 109 Tage alte Chrysanthemen der Sorte "Camilla" werden in 2 1-Gefäßen in drei Replikationen gegen die Salatwurzellaus Pemphigus bursarius behandelt. Dabei werden die Wirkstoffe Beispiel (I-9) (Vergleichsbeispiel, nicht unter den Umfang der Erfindung fallend) (240 SC) und Beispiel (I-2) (Vergleichsbeispiel, nicht unter den Umfang der Erfindung fallend) (240 SC) mit einer pressluftbetriebenen Rückenspritze in den angegebenen Aufwandmengen nur auf die oberirdischen Pflanzenteile appliziert. Der Boden ist mit einer Folie abgedeckt. Die Wasseraufwandmenge beträgt 300 l/ha. Der Spritzbrühe wird 0,1 % a.i. Rapsölmethylester (500 EW) hinzugefügt.

Die Bestimmung der Abtötung in Prozent wird an den Wurzeln vorgenommen. 21 und 29 Tage nach der Anwendung erhält man folgende Ergebnisse:

| Wirkstoff | Aufwandmenge a.i. in % | Abtötung (%) | |
|---|---|---|---|
| | | 21 d | 29 d |
| Beispiel (I-9) | 144 | 76,5 | 94,0 |
| Beispiel (I-2) | 96 | 80,8 | 91,8 |

### Beispiel 3

Je 10 ca. 5 Monate alte Chrysanthemen (Camilla) in 2 1-Gefäßen werden in drei Replikationen gegen die Salatwurzellaus Pemphigus bursarius behandelt. Dabei wird der Wirkstoff Beispiel (I-4) (240 SC) mit einer pressluftbetriebenen Rückenspritze bei Beginn der Infestation in den angegebenen Aufwandmangen auf die oberirdischen Pflanzenteile appliziert. Der Boden ist mit einer Folie abgedeckt. Die Wasseraufwandmenge beträgt 600 l/ha. Der Spritzbrühe werden 0,1 % a.i. Rapsölmethylester (500 EW) hinzugefügt. Als Vergleich wird Omethoate als Tröpfchenbewässerung in einer Konzentration von 0,1 % verwendet. Die Applikation wird 2 Tage später durchgeführt.

Die Bestimmung der Abtötung in Prozent wird an den Wurzeln vorgenommen. Nach 9 und 17 Tagen erhält man folgende Abtötungen:

| Wirkstoff | Aufwandmenge | Abtötung (%) | |
|---|---|---|---|
| Beispiel (I-4) | 96 g a.i./ha | 46,9 (9d) | 80,4 (17d) |
| Omethoate | Tröpfchenbewässerung 0,1 % | 20 (7d) | 70,6 (15d) |

### Wurzeläuse (Phylloxeridae)

Ganz besonders bevorzugt ist die Bekämpfung folgender Arten aus der Familie der Wurzelläuse (Phylloxeridae) bevorzugt nach Blattapplikation:

| | |
|---|---|
| Phylloxera devastatrix | in Wein, in Nüssen wie z.B. Pekannüssen, |
| Phylloxera vastatrix, (≙ Viteus vitifolii) | in Wein. |

### Beispiel 4

Drei je etwa 12 Jahre alte Rebstöcke der Sorte "Auvernat" werden in vier Replikationen gegen Viteus vitifolii behandelt. Als kommerzieller Standard wird Imidacloprid in der empfohlenen Aufwandmenge über eine Tröpfchenbewässerung angewendet. Die Applikation der Wirkstoffe erfolgt durch Sprühapplikation auf die Blätter mit einer pressluftbetriebenen Rückenspritze. Dabei werden die Wirkstoffe Beispiel (1-4) (240 SC) und Beispiel (I-9) (Vergleichsbeispiel, nicht unter den Umfang der Erfindung fallend) (240 SC) in einer Tankmischung mit 0,1 % a.i. Rapsölmethylester (500 EW) in der angegebenen Menge appliziert. Es erfolgen drei Applikationen am Tag 1, 2 und 15. Die Wasseraufwandmenge beträgt 1776 1/ha.

Die Auswertung erfolgt 60 Tage nach der letzten Behandlung, indem man die Abtötung an den Wurzeln in Prozent bonitiert.

| Wirkstoff | Aufwandmenge a.i. | Abtötung (%) |
|---|---|---|
| Imidacloprid | Tröpfchenbewässerung 560 g/ha | 26 |
| Beispiel (I-4) | 0,0168 % | 55 |
| Beispiel (I-9) | 0,0144 % | 42 |

### Blattflöhe (Psyllidae)

Ganz besonders bevorzugt ist die Bekämpfung folgender Arten aus der Familie der Blattflöhe (Psyllidae):

| | |
|---|---|
| Psylla pyricola | in Kernobst wie z.B. Birnen, Äpfeln, in Steinobst wie z.B. Kirschen, Pflaumen, Zwetschgen, Pfirsichen, Nektarinen, |
| Psylla piri | in Kernobst wie z.B. Birnen, |
| Psylla pyrisuga | in Kernobst wie z.B. Birnen, |
| Psylla costalis | in Kernobst wie z.B. Äpfeln, |
| Paratrioza cockerelli | in Fruchtgemüse wie z.B. Tomaten, Paprika, Chillis, in Wurzelgemüse wie z.B. Möhren, in Kartoffeln, |
| Tenalaphara malayensis | in tropischen Kulturen wie z.B. Durians (Stinkfrüchte), |
| Diaphorina citri | in Zitrus wie z.B. Orangen, Mandarinen, Limonen, Grapefruits, |
| Trioza erythrae | in Zitrus wie z.B. Orangen, Grapefruits. |

### Beispiel 5

Birnenbäume der Sorte "Williams Christ" werden in drei Replikationen gegen Psylla piri behandelt. Es wird kurz vor Schlupf der Eier appliziert. Die Applikation wird mit einem pressluftbetriebenen Karrengerät durchgeführt. Dabei werden der Wirkstoff Beispiel (I-4) (240 SC) in einer Tankmischung mit 0,1 % a.i. Räpsölmethylester (500 EW) in der angegebenen Menge gegen den Standard Amitraz (200 EC) in der angegebenen Menge geprüft. Die Wasseraufwandmenge beträgt 1000 l/ha.

Die Auswertung erfolgt 7, 14 und 21 Tagen nach der Behandlung, indem man die Abtötung der Nymphen auf den Trieben bonitiert.

| Wirkstoff | Aufwandmenge g a.i./ha/m Kronenhöhe | Abtötung (%) | | |
|---|---|---|---|---|
| | | 7d | 14d | 21d |
| Amitraz | 266 | 100 | 95.2 | 75 |
| Beispiel (I-4) | 72 | 100 | 100 | 100 |

### Beispiel 6

Je vier etwa 4 Jahre alte Birnenbäume der Sorte "Williams Christ" werden in drei Replikationen gegen Psylla piri behandelt. Es erfolgen zwei Applikationen im Abstand von 11 Tagen mit einem motorbetriebenen Karrengerät. Dabei werden die Wirkstoffe Beispiel (I-9) (Vergleichsbeispiel, nicht unter den Umfang der Erfindung fallend) (240 SC), Beispiel (I-2) (Vergleichsbeispiel, nicht unter den Umfang der Erfindung fallend) (240 SC) und Beispiel (I-1) (Vergleichsbeispiel, nicht unter den Umfang der Erfindung fallend) (240 SC) gegen den kommerziellen Standard Amitraz (200 EC) in den angegebenen Mengen geprüft. Die Wasseraufwandmenge beträgt 2000 l/ha.

Die Auswertung erfolgt 3, 10 und 20 Tage nach der letzten Behandlung, indem man die Abtötung der Larven in Prozent auf den Trieben bonitiert.

| Wirkstoff | Aufwandmenge (%) a.i. | Abtötung (%) | | |
|---|---|---|---|---|
| | | 3d | 10d | 20d |
| Amitraz | 0,05 | 54,3 | 56,7 | 21,4 |
| Beispiel (I-9) | 0,096 | 97,7 | 100 | 100 |
| Beispiel (I-2) | 0,096 | 96,7 | 99 | 97,9 |
| Beispiel (I-1) | 0,096 | 90,0 | 96,6 | 95,0 |

### Beispiel 7

Ca. 7 m² große Parzellen mit Gemüsepaprika der Sorte "Jupiter" werden in vier Replikationen gegen Paratrioza cockerelli behandelt. Die Applikation erfolgt mit einer luftdruckgetriebenen Rückenspritze. Dabei wird der Wirkstoff Beispiel (I-4) 240 SC), in einer Tankmischung mit 0,2 % a.i. Rapsölmethylester (500 EW) und die kommerziellen Standards Imidacloprid 192 SC und Dimethoat (480 EC) in einer Tankmischung mit 0.125 % Induce in den angegebenen Aufwandmengen ausgebracht. Die Anwendung erfolgt mit einer Wasseraufwandmenge von 467 l/ha.

Die Auswertung erfolgt 7 und 15 Tage nach der Behandlung, indem man die Abtötung der Tiere (Nymphen) an den Blättern bonitiert.

| Wirkstoff | Aufwandmenge g a.i./ha | Abtötung (%) | |
|---|---|---|---|
| | | 7 d | 15 d |
| Imidacloprid | 52.6 | 90 | 0 |
| Beispiel (1-4) | 72 | 90 | 100 |
| Dimethoat | 561 | 63 | 0 |

### Beispiel 8

Ca. 2 Jahre alte Orangenbäumchen werden in drei Replikationen gegen Trioza erythreae behandelt. Die Applikation erfolgt mit einer luftdruckbetriebenen Rückenspritze. Dabei wird der Wirkstoff Beispiel (I-4) (240 SC) in einer Tankmischung mit 0,2 % a.i. Rapsölmethylester (500 EW) gegen den kommerziellen Standard Imidacloprid (100 SL) in den angegebenen Aufwandmengen geprüft. Die Wasseraufwandmenge beträgt 540 l/ha. Es werden zwei Behandlungen im Abstand von 7 Tagen durchgeführt.

Die Auswertung erfolgt 7, 14 und 20 Tage nach der ersten Behandlung, indem man die Abtötung der Nymphen auf den Zweigen bonitiert.

| Wirkstoff | Aufwandmenge (%) | Abtötung (%) | | |
|---|---|---|---|---|
| | | 7d | 14d | 20d |
| Imidacloprid | 0.004 | 98.4 | 99.2 | 98.6 |
| Beispiel (I-4) | 0.0144 | 97.9 | 98.9 | 98.3 |

### Beispiel 9

10 m² große Parzellen mit Tomaten werden in drei Replikationen gegen Paratrioza cockerelli behandelt. Die Applikation erfolgt mit einer pressluftgetriebenen Rückenspritze. Dabei wird der Wirkstoff Beispiel (I-4) (240 SC) in einer Tankmischung mit 0,2 % a.i. Rapsölmethylester (500 EW) und der kommerzielle Standard Leverage (324 SE) in den angegebenen Aufwandmengen geprüft. Es erfolgen zwei Anwendungen im Abstand von 7 Tagen. Die Wasseraufwandmenge beträgt 345 l/ha.

Die Auswertung erfolgt 7, 14 und 21. Tage nach der ersten Behandlung, indem man die Abtötung der Tiere (Nymphen) an den Blättern bonitiert.

| Wirkstoff | Aufwandmenge g a.i./ha | Abtötung (%) | | |
|---|---|---|---|---|
| | | 7d | 14d | 21d |
| Levarage | 81 | 75.4 | 81.1 | 92.1 |
| Beispiel (I-4) | 48 | 71.3 | 90.3 | 95.5 |

### Napfschildläuse (Coccidae)

Ganz besonders bevorzugt ist die Bekämpfung folgender Arten aus der Familie der Napfschildläuse (Coccidae) in folgenden Kulturen bevorzugt nach Blattapplikation:

| | |
|---|---|
| Ceroplastes ceriferus Ceroplastes floridensis Ceroplastes rubens Ceroplastes rusci | in Zitrus wie z.B. Orangen, Grapefruits, Mandarinen, Zitronen, Limetten, Satsumas |
| | |
| Drosicha mangiferae | in tropischen Kulturen, z.B. Mangos |
| Drosicha stebbengii | |
| | |
| Pulvinaria aurantii | in Zitrus wie z.B. Orangen, Grapefruits, Mandarinen, Zitronen, |
| Pulvinaria aethiopicus | Limetten, Satsumas, in Wein |
| Pulvinaria vitis | |
| | |
| Protopulminaria pyriformis | in Kern- und Steinobst, |
| | |
| Saissetia oleae | in Zitrus wie z.B. Orangen, Grapefruits, Mandarinen, Limetten, |
| | |
| Saissetia nigra | in Zitrus wie z.B. Zitronen, Satsumas, in Oliven, in tropischen Kulturen z.B. Bananen |
| | |
| Coccus viridis | in Zitrus wie z.B. Orangen, Mandarinen, Grapefruits, Limetten, Zitronen, Satsumas, in tropischen Kulturen, z.B. Ananas |
| | |
| Coccus hesperdium | in Kernobst wie z.B. Äpfeln, Birnen, in Steinobst wie z.B. Pfirsichen, Nektarinen, Pflaumen, Aprikosen, Kirschen, in Kaffee, in Oliven, in Tee, in Gemüse wie z.B. Bohnen, in Wein |

### Beispiel 10

Etwa 6 Jahre alte Mandarinenbäumchen der Sorte "Naartje" werden in drei Replikationen gegen Pulvinaria aethiopicus behandelt. Es erfolgen zwei Applikationen im Abstand von 32 Tagen als Eradikativbehandlung mit einer pressluftbetriebenen Rückenspritze. Dabei werden die Wirkstoffe Beispiel (I-9) (Vergleichsbeispiel, nicht unter den Umfang der Erfindung fallend) (240 SC) und Beispiel (I-2) (Vergleichsbeispiel, nicht unter den Umfang der Erfindung fallend) (240SC) gegen eine kommerzielle Tankmischung aus einem in Südafrika im Handel erhältlichen landesüblichen Mineralöl (835 EC) und Pyriproxifen (100 EC) in den angegebenen Mengen geprüft. Die Wasseraufwandmenge beträgt 8,3 1/Bäumchen. Die Auswertung erfolgt 45 Tage nach der letzten Behandlung, indem man die Abtötung in Prozent auf den Früchten bonitiert.

| Wirkstoff | Aufwandmenge (%) a.i. | Abtötung (%) |
|---|---|---|
| Mineralöl | 0,251 | 90 |
| + Pyriproxifen | 0,003 | |
| Beispiel (I-9) | 0,0096 | 91 |
| Beispiel (1-2) | 0,0144 | 72 |

### Beispiel 11

Je ein ca. 4 Jahre altes Satsumabäumchen der Sorte "Nankan 20" wird in drei Replikationen gegen Pulvinaria aurantii behandelt. Dabei wird der Wirkstoff Beispiel (1-4) (240 SC) in einer Tankmischung mit 0,2 % Rapsölmethylester (500 EW) in der angegebenen Aufwandmenge gegen den kommerziellen Standard Buprofezin in der angegebenen Aufwandmenge geprüft. Die Applikation erfolgt mit einer motorgetriebenen Rückenspritze. Dabei wird jede Pflanze mit 400 ml Spritzbrühe behandelt.

Die Auswertung erfolgt vor und 41 Tage nach der Behandlung durch Zählen der lebenden Tiere. Anschließend wird der Wirkungsgrad in Prozent nach Henderson und Tilton berechnet.

| Wirkstoff | Aufwandmenge (%) a.i. | Wirkung (%) |
|---|---|---|
| Buprofezin | 0,025 | 68 |
| Beispiel (I-4) | 0,0144 | 100 |

### Beispiel 12

Je ein ca. 4 Jahre altes Satsumabäumchen der Sorte "Nankan 20" wird in drei Replikationen gegen Ceroplastes rubens behandelt. Dabei wird der Wirkstoff Beispiel (I-4) (240 SC) in einer Tankmischung mit 0,1 % a.i. Rapsölmethylester (500 EW) in der angegebenen Aufwandmenge gegen den kommerziellen Standard Buprofezin (25 WP) in der angegebenen Aufwandmenge geprüft. Die Applikation erfolgt mit einer motorgetriebenen Rückenspritze. Dabei wird mit einer Wasseraufwandmenge von 400 l/ha behandelt.

Die Auswertung erfolgt vor und 41 Tage nach der Behandlung durch Zählen der lebenden Tiere. Anschließend wird der Wirkungsgrad in Prozent nach Henderson und Tilton berechnet.

| Wirkstoff | Aufwandmenge (%) a.i. | Wirkung (%) |
|---|---|---|
| Buprofezin | 0,025 | 50 |
| Beispiel (I-4) | 0,0072 | 98 |

### Beispiel 13

Je zwei ca. 8 Jahre alte Orangenbäumchen werden in drei Replikationen gegen Saissetia oleae behandelt. Dabei werden die Wirkstoffe Beispiel (I-4) (240 SC) und Beispiel (I-8) (Vergleichsbeispiel, nicht unter den Umfang der Erfindung fallend) (250 SC) in einer Tankmischung mit 0,2 % a.i. Rapsölmethylester (500 EW) in der angegebenen Aufwandmenge gegen den kommerziellen Standard Buprofezin in einer Tankmischung mit 0,4 % a.i. Oliocin (800 EW) in der angegebenen Aufwandmenge geprüft. Die Applikation erfolgt mit einer motorgetriebenen Rückenspritze. Die Wasseraufwandmenge beträgt 3000 l/ha. Es werden zwei Behandlungen im Abstand von 29 Tagen durchgeführt.

Die Auswertung erfolgt 24 und 44 Tage nach letzter Behandlung, indem man die Abtötung der Nymphen an den Blättern bonitiert.

| Wirkstoff | Aufwandmenge g a.i./ha/m Kronenhöhe | Abtötung (%) | |
|---|---|---|---|
| | | 24 d | 44 d |
| Buprofezin | 500 | 33,5 | 50,5 |
| Beispiel (I-4) | 72 | 53,5 | 56,1 |
| Beispiel (I-8) | 30 | 66,5 | 56,1 |

### Beispiel 14

Orangenbäumchen der Sorte "Navelina" werden in drei Replikationen gegen Saissetia oleae behandelt. Dabei werden die Wirkstoffe Beispiel (I-4) (240 SC) und Beispiel (I-9) (Vergleichsbeispiel, nicht unter den Umfang der Erfindung fallend) (240 SC) in einer Tankmischung mit 0,1 % Rapsölmethylester (500 EW) in der angegebenen Aufwandmenge gegen die kommerziellen Standards Dursban (480 EC) und Pyriproxyfen (100 EC) in der angegebenen Aufwandmenge geprüft. Die Applikation erfolgt mit einer motorgetriebenen Rückenspritze. Die Wasseraufwandmenge beträgt 3200 l/ha.

Die Auswertung erfolgt 120 Tage nach der Behandlung, indem man die Abtötung der Tiere auf den Zweigen bonitiert.

| Wirkstoff | Aufwandmenge (%) a.i. | Wirkung (%) |
|---|---|---|
| | | 120 d |
| Dursban | 0,096 | 0 |
| Beispiel (I-4) | 0,012 | 98 |
| Beispiel (I-9) | 0,0054 | 79 |
| Pyriproxyfen | 0,005 | 100 |

### Deckelschildläuse (Diaspididae)

Ganz besonders bevorzugt ist die Bekämpfung folgender Arten aus der Familie der Deckelschildläuse (Diaspididae) in folgenden Kulturen bevorzugt nach Blattapplikation:

| | |
|---|---|
| Quadraspidiotus perniciosus Quadraspidiotus juglansregiae | in Zitrus wie z.B. Orangen, Mandarinen, Limonen, Grapefruits, in Kernobst wie z.B. Äpfeln, Birnen, Quitten, in Steinobst wie z.B. Pfirsichen, Nektarinen, Aprikosen, Pflaumen, Kirschen, in Nüssen wie z.B. Mandeln, Pistazien, Wallnüsse, Haselnüsse, in Zierpflanzen wie z.B. Sträuchern, Koniferen, Topfpflanzen, in tropischen Kulturen, z.B. Litschies |
| | |
| Aonidiella aurantii | in Zitrus wie z.B. Orangen, Mandarinen, Grapefruits, Limetten, Zitronen, Satsumas |
| Aonidiella citrina | |
| | |
| Lepidosaphes ulmi | in Zitrus wie z.B. Orangen, Mandarinen, Grapefruits, Limetten, Zitronen, Satsumas, in Kernobst wie z.B. Äpfeln und Birnen, in Steinobst wie z.B. Pfirsiche, Nektarinen, Pflaumen, Aprikosen, Kirschen, |
| Lepidosaphes beckii | |
| | |
| Aspidiotus destructor | in Zitrus wie z.B. Orangen, Mandarinen, Grapefruits, Limetten, Zitronen, Satsumas, in Zierpflanzen wie z.B. Sträuchern, Topfpflanzen, in Oliven, in tropischen Kulturen, z.B. Mangos, Limonen, |
| Aspidiotus hederae | |
| Aspidiotus nerii | |
| Aspidiotus ficus | |
| | |
| Pseudaulacaspis pentagona | in Kernobst wie z.B. Äpfel, Birnen, in Steinobst wie z.B. Pfirsiche, Aprikosen, Nektarinen, Kirschen, Pflaumen, Zwetschgen, in Tee, |
| | |
| Unaspis yanonensis Unaspis citri | in Zitrus wie z.B. Orangen, Mandarinen, Limetten, Grapefruits, Zitronen, Satsumas, in tropischen Kulturen, z.B. Ananas, Mangos, |
| | |
| Pinnaspis aspidistrae | in Zitrus wie z.B. Orangen, Mandarinen, Limetten, Zitronen, Satsumas, Grapefruits, in Oliven, |
| Parlatoria ziziphus | |
| Parlatoria pergandei | |
| Parlatoria oleae | |
| | |
| Selenaspidus articulatus | in Zitrus wie z.B. Orangen, Mandarinen, Limetten, Grapefruits, Zitronen, Satsumas |

### Beispiel 15

3 Jahre alte Orangenbäumchen der Sorte "Midnight Valenzia" werden in drei Replikationen gegen Aonidiella aurantii behandelt. Es erfolgen zwei Applikationen, im Abstand von 72 Tagen mit einer motorgetriebenen Rückenspritze. Dabei werden die Wirkstoffe Beispiel (I-9) (Vergleichsbeispiel, nicht unter den Umfang der Erfindung fallend) (240 SC) und Beispiel (I-2) (Vergleichsbeispiel, nicht unter den Umfang der Erfindung fallend) (240 SC) in einer Tankmischung mit 0,1 % a.i. Rapsölmethylester (500 EW) in der angegebenen Aufwandmenge gegen den Standard Tokuthion (960 EC) in den angegebenen Mengen bei einmaliger Applikation geprüft. Die Wasseraufwandmenge beträgt 41 pro Bäumchen. Die Auswertung erfolgt 130 und 176 Tage nach der Behandlung, indem man die Abtötung auf den Früchten bonitiert.

| Wirkstoff | Aufwandmenge (%) a.i. | Abtötung (%) | |
|---|---|---|---|
| | | 130d | 176d |
| Tokuthion | 0,048 | 12 | 0 |
| Beispiel (I-9) | 0,0096 | 86 | 100 |
| Beispiel (I-2) | 0,0096 | 52 | 76 |

### Beispiel 16

Ein ca. 10 Jahre alter Grapefruitbaum der Sorte "Rio Red" wird in vier Replikationen gegen Aonidiella aurantii behandelt. Die Applikation erfolgt mit einer motorgetriebenen Karrenspritze. Dabei wird der Wirkstoff Beispiel (I-4) (240 SC) und der kommerzielle Standard Dursban (480 EC) in den angegebenen Aufwandmengen geprüft. Die Spritzbrühenmenge beträgt 5.8 Gallonen pro Baum.

Die Auswertung erfolgt 28, 59 und 90 Tage nach der Behandlung, indem man die Abtötung der Tiere auf den Früchten bonitiert.

| Wirkstoff | Aufwandmenge pro Meter Kronenhöhe a.i. | Abtötung (%) | | |
|---|---|---|---|---|
| | | 28d | 59d | 90d |
| Dursban | 6,01 pounds/acre | 100 | 100 | 100 |
| Beispiel (I-4) | 72 g/ha | 92,7 | 100 | 100 |

### Beispiel 17

Vier ca. 18 Jahre alte Apfelbäumchen der Sorte "Red Chief" werden in drei Replikationen gegen die San José Schildlaus Quadraspidiotus perniciosus behandelt. Es erfolgen zwei Applikationen im Abstand von 15 Tagen mit einem motorbetriebenen Karrenspritzgerät. Dabei wird der Wirkstoff Beispiel (I-4) (240 SC) in eine Tankmischung mit 0,2 % a.i. Rapsölmethylester (500 EW) in der angegebenen Aufwandmenge und der kommerzielle Standard Dursban (446 EC) in der angegebenen Aufwandmenge appliziert. Die Wasseraufwandmenge beträgt 1500 l/ha.

Die Auswertung erfolgt 43 Tage nach der letzten Behandlung, indem man die Abtötung auf den Trieben bonitiert.

| Wirkstoff | Aufwandmenge g a.i./ha/m Kronenhöhe | Abtötung (%) |
|---|---|---|
| Dursban | 223 | 68,3 |
| Beispiel (I-4) | 72 | 90,4 |

### Beispiel 18

In ca. 20 m² großen Parzellen werden Zitrusbäumchen der Sorte "Oro Nules" in drei Replikationen gegen Lepidosaphes beckii behandelt. Die Applikation erfolgt mit einer Hochdruckspritze. Dabei wird der Wirkstoff Beispiel (I-4) (240 SC) in einer Tankmischung mit 0,1 % a.i. Rapsölmethylester (500 EW) gegen den kommerziellen Standard Pyriproxyfen (100 EC) in den angegebenen Aufwandmengen geprüft. Die Wasseraufwandmenge beträgt 2500 l/ha.

Die Auswertung erfolgt 140 Tage nach der Behandlung, indem man die Abtötung der Larven auf den Früchten bonitiert.

| Wirkstoff | Aufwandmenge g a.i./ha/m Kronenhöhe | Abtötung (%) 140 Tage |
|---|---|---|
| Pyriproxyfen | 50 | 100 |
| Beispiel (I-4) | 48 | 100 |

### Beispiel 18a

Die Auswertung für das Beispiel 18a gegen Parlatoria pergandei wird als Teil des Versuchs wie in Beispiel 27 beschrieben durchgeführt und ist im Beispiel 27 gesondert aufgeführt.

### Beispiel 19

3 Jahre alte Orangenbäumchen der Sorte "Pera natal" werden in drei Replikationen gegen Selenaspidius articulatus behandelt. Die Applikation erfolgt mit einer motorgetriebenen Rückenspritze. Dabei werden die Wirkstoffe Beispiel (I-9) (Vergleichsbeispiel, nicht unter den Umfang der Erfindung fallend) (240 SC) und Beispiel (I-4) (240 SC) in der angegebenen Aufwandmenge gegen den Standard Methidathion (400 EC) in den angegebenen Mengen bei einmaliger Applikation geprüft. Die Wasseraufwandmenge beträgt 3.3 1 pro Bäumchen.

Die Auswertung erfolgt 100 Tage nach der Behandlung, indem man die Abtötung auf den Blättern bonitiert.

| Wirkstoff | Aufwandmenge (%) a.i. | Abtötung (%) |
|---|---|---|
| | | 100d |
| Methidathion | 0,05 | 77 |
| Beispiel (I-9) | 0,0288 | 77 |
| Beispiel (I-4) | 0,0144 | 70 |

### Beispiel 20

Etwa 5 Jahre alte Limonenbäumchen der Sorte "Fino" werden in vier Replikationen gegen Aspidiotus neri behandelt. Es erfolgt eine Applikation mit einem Knapsackspritzgerät. Dabei wird der Wirkstoff Beispiel (I-4) (240 SC) in einer Tankmischung mit 0,1 % a.i. Rapsölmethylester (500 EW) in der angegebenen Aufwandmenge gegen die Standards Dursban (480 EC) und Juvinal (100 EC) in den angegebenen Mengen bei einmaliger Applikation geprüft. Die Wasseraufwandmenge beträgt 3000 l/ha pro Bäumchen.

Die Auswertung erfolgt 167 Tage nach der Behandlung, indem man die Abtötung auf den Früchten bonitiert.

| Wirkstoff | Aufwandmenge (%) a.i. | Abtötung (%) |
|---|---|---|
| | | 167d |
| Dursban | 0.096 | 76.9 |
| Juvinal | 0.005 | 86.5 |
| Beispiel (I-4) | 0.0072 | 96.2 |

### Beispiel 21

Ein ca. 20 Jahre alter Mandelbaum der Sorte "Non-Pareil" wird in vier Replikationen gegen Quadraspidiotus perniciosus behandelt. Die Applikation erfolgt mit einer Hochdruckspritze. Dabei wird der Wirkstoff Beispiel (I-4) (240 SC) in einer Tankmischung mit 0.125 % a.i. methylierten Saatöl (1000 EC) und der kommerzielle Standard Lorsban (480 EC) in den angegebenen Aufwandmengen geprüft. Die Spritzbrühenmenge beträgt 935 l/ha.

Die Auswertung erfolgt 21, 42 und 63 Tage nach der Behandlung, indem man die Abtötung der Tiere auf den Zweigen bonitiert.

| Wirkstoff | Aufwandmenge pro Meter Kronenhöhe a.i. | Abtötung (%) | | |
|---|---|---|---|---|
| | | 21d | 42d | 63d |
| Dursban | 2240 g/ha | 82.2 | 73.3 | 78.4 |
| Beispiel (I-4) | 110 g/ha | 84.9 | 90 | 94.6 |

### Beispiel 22

Auf ca. 46 m² werden Pfirsichbäumchen in zehn Replikationen gegen Pseudaulacaspis pentagona behandelt. Es erfolgen zwei Applikationen im Abstand von 57 Tagen mit einem druckluftbetriebenen Spritzgerät. Dabei wird der Wirkstoff Beispiel (1-4) (240 SC) in eine Tankmischung mit 0,2 % Dynamic (910 XL) in der angegebenen Aufwandmenge und der kommerzielle Standard Esteem (35 WP) in der angegebenen Aufwandmenge appliziert. Die Wasseraufwandmenge beträgt 935 l/ha.

Die Auswertung erfolgt 35 und 79 Tage nach der letzten Behandlung, indem man die Abtötung der Crawler auf den Trieben bonitiert.

| Wirkstoff | Aufwandmenge g a.i./ha/m Kronenhöhe | Abtötung (%) | |
|---|---|---|---|
| | | 35d | 79d |
| Esteem | 98 | 98 | 94 |
| Beispiel (I-4) | 120 | 90 | 87 |

### Beispiel 23

Ca. 16 Jahre alte japanische Aprikosenbäumchen der Sorte "Shirokag" werden in sechs Replikationen gegen Pseudaulacaspis prunicola behandelt. Die Applikation erfolgt mit einem Spritzgerät. Dabei wird der Wirkstoff Beispiel (I-4) (200 SC) gegen den kommerziellen Standard Supracide EC (400 EC) in den angegebenen Aufwandmengen geprüft. Die Wasseraufwandmenge beträgt 1500 l/ha.

Die Auswertung erfolgt 58 Tage nach der Behandlung, indem man die Abtötung der Nymphen auf den Trieben bonitiert.

| Wirkstoff | Aufwandmenge (%) a.i. | Abtötung (%) |
|---|---|---|
| | | 58 Tage |
| Supracide EC | 0.04 | 91.6 |
| Beispiel (I-4) | 0.0075 | 92.3 |

### Beispiel 24

Ca. 7 Wochen alte Teepflanzen der Sorte "Yakubita" werden in neun Replikationen gegen Pseudaulacaspis pentagona behandelt. Dabei wird der Wirkstoff Beispiel (I-4) (200 SC) gegen den kommerziellen Standard Supracide EC (400 EC) in den angegebenen Aufwandmengen geprüft. Die Applikation erfolgt mit einem luftdruckbetriebenen Spritzgerät. Die Auswertung erfolgt 16 und 35 Tage nach der Behandlung, indem man die Abtötung der Crawler an den Pflanzen bonitiert.

| Wirkstoff | Aufwandmenge (%) a.i. | Abtötung (%) | |
|---|---|---|---|
| | | 16d | 35d |
| Supracide EC | 0.04 | 60.3 | 100 |
| Beispiel (I-4) | 0.01 | 81.8 | 75 |

### Röhrenschildläuse (Ortheziidae)

Ganz besonders bevorzugt ist die Bekämpfung folgender Arten aus der Familie der Röhrenschildläuse (Ortheziidae) in folgenden Kulturen bevorzugt nach Blattapplikation:

| | |
|---|---|
| Orthezia praelonga | in Zitrus wie z.B. Orangen, Mandarinen, Limetten, Grapefruits, Zitronen, Satsumas, Apfelsinen |

### Beispiel 25

Zwei ca. 7 Jahre alte Apfelsinenbäume der Sorte "Pera Rio" werden in zwei Replikationen gegen Orthezia praelonga behandelt. Dabei werden die Wirkstoffe Beispiel (I-4) (240 SC) und Beispiel (I-9) (Vergleichsbeispiel, nicht unter den Umfang der Erfindung fallend) (240 SC) in einer Tankmischung mit 0,1 % a.i. Renex gegen den kommerziellen Standard Methidathion (400 EC) in den angegebenen Aufwandmengen geprüft. Die Applikation erfolgt mit einer luftdruckbetriebenen Rückenspritze. Die Auswertung erfolgt 6 und 16 Tage nach der Behandlung, indem man die Abtötung der Population an den Blättern bonitiert.

| Wirkstoff | Aufwandmenge (%) a.i. | Abtötung (%) | |
|---|---|---|---|
| | | 6d | 16d |
| Methidathion | 0.05 | 91 | 61 |
| Beispiel (I-4) | 0.0144 | 94 | 76 |
| Beispiel (I-9) | 0.0144 | 89 | 63 |

### Schmier- und Wollläuse (Pseudococcidae)

Ganz besonders bevorzugt ist die Bekämpfung folgender Arten aus der Familie der Schmier- und Wollläuse (Pseudococcidae) in folgenden Kulturen:

| | |
|---|---|
| Pseudococcus citri | in Zitrus wie z.B. Orangen, Mandarinen, Grapefruits, Limetten, |
| Pseudococcus comstocki | Zitronen, Satsumas, in Kernobst wie z.B. Äpfeln und Birnen, in |
| Pseudococcus maritimus | Wein, in Zierpflanzen, in tropischen Kulturen wie z.B. Ananas, |
| Dysmicoccus boninsis | in Kernobst wie z.B. Äpfeln, Birnen, in Tee, in tropischen Kulturen |
| Dysmicoccus cryptus | wie z.B. Ananas, Guyabano, |
| Dysmicoccus brevipes | |
| Planococcus lilacinus | in Zitrus wie z.B. Orangen, Mandarinen, Grapefruits, Limetten, |
| Planococcus citri | Zitronen, Satsumas, in Wein, |
| Pericerga purchasi | in Zitrus wie z.B. Orangen, Mandarinen, Grapefruits, Limetten, Zitronen, Satsumas |

### Beispiel 26

In ca. 20 m² großen Parzellen werden Zitrusbäumchen der Sorte "Oro Nules" in drei Replikationen gegen Pseudococcus citri behandelt. Die Applikation erfolgt mit einer Hochdruckspritze. Dabei wird der Wirkstoff Beispiel (I-4) (240SC) in einer Tankmischung mit 0,1 % a.i. Rapsölmethylester (500 EW) gegen den kommerziellen Standard Dursban (480 EC) in den angegebenen Aufwandmengen geprüft. Die Wasseraufwandmenge beträgt 2500 1/ha.

Die Auswertung erfolgt 62 Tage nach der Behandlung, indem man die Abtötung der Larven auf den Früchten bonitiert.

| Wirkstoff | Aufwandmenge g a.i./ha/m Kronenhöhe | Abtötung (%) |
|---|---|---|
| | | 62 Tage |
| Dursban | 960 | 100 |
| Beispiel (I-4) | 72 | 99 |

### Beispiel 27

Orangenbäumchen der Sorte "Navelina" werden in drei Replikationen gegen Parlatoria pergandei und Pseudococcus citri behandelt. Es erfolgen zwei Applikationen im Abstand von 77 Tagen mit einer motorgetriebenen Rückenspritze. Dabei wird der Wirkstoff Beispiel (I-9) (Vergleichsbeispiel, nicht unter den Umfang der Erfindung fallend) (240 SC) in einer Tankmischung mit 0,1 % a.i. Rapsölmethylester (500 EW) in der angegebenen Menge gegen den kommerziellen Standard Pyriproxyfen (100 EC) in den angegebenen Mengen geprüft. Die Wasseraufwandmenge beträgt 3000 l/ha.

Die Auswertung erfolgt 56 Tage bzw. 73 Tage nach der letzten Behandlung, indem man die Abtötung in Prozent auf den Früchten bonitiert.

### Parlatoria pergandei (Beispiel 18a)

| Wirkstoff | Aufwandmenge (%) a.i. | Abtötung (%) |
|---|---|---|
| | | 73d |
| Pyriproxyfen | 0,005 | 97,5 |
| Beispiel (I-9) | 0,0096 | 98,7 |

### Pseudococcus citri

| Wirkstoff | Aufwandmenge (%) a.i. | Abtötung (%) |
|---|---|---|
| | | 56d |
| Pyriproxyfen | 0,005 | 28,8 |
| Beispiel (I-9) | 0,0096 | 94,6 |

### Beispiel 28

Drei je etwa 12 Jahre alte Rebstöcke der Sorte "Auvernat" werden in vier Replikationen gegen Pseudococcus spp. behandelt. Als kommerzieller Standard wird eine Anwendung mit Imidacloprid in der empfohlenen Aufwandmenge über eine Tröpfchenbewässerung eingesetzt. Die Applikation der Wirkstoffe erfolgt durch Sprühen mit einer pressluftbetriebenen Rückenspritze. Dabei werden die Wirkstoffe Beispiel (I-4) (240 SC) und Beispiel (I-9) (Vergleichsbeispiel, nicht unter den Umfang der Erfindung fallend) (240 SC) in einer Tankmischung mit 0,1 % a.i. Rapsölmethylester (500 EW) in der angegebenen Menge appliziert. Es erfolgen zwei Applikationen im Abstand von 15 Tagen. Die Wasseraufwandmenge beträgt 1776 l/ha. Die Auswertung erfolgt 28 Tage nach der letzten Behandlung, indem man die Abtötung an den Trauben in Prozent bonitiert.

| Wirkstoff | Aufwandmenge a.i. | Abtötung (%) |
|---|---|---|
| Imidacloprid | Tröpfchenbewässerung 560 g/ha | 100 |
| Beispiel (I-4) | 0,0168 % | 99 |
| Beispiel (I-9) | 0,0144 % | 100 |

### Beispiel 29

In 54 m² großen Parzellen werden ca. 10 Jahre alte Weinreben der Sorte "Napoleon" in drei Replikationen gegen Planococcus spp. behandelt. Die Applikation erfolgt mit einer Knapsackspritze. Dabei wird der Wirkstoff Beispiel (I-4) (240 SC) in einer Tankmischung mit 0,1 % a.i. Rapsölmethylester (500 EW) gegen den kommerziellen Standard Dursban (480 EC) in den angegebenen Aufwandmengen geprüft. Die Wasseraufwandmenge beträgt 864 l/ha. Es werden zwei Behandlungen im Abstand von 19 Tagen durchgeführt.

Die Auswertung erfolgt 16 und 38 Tage nach der zweiten Behandlung, indem man die Abtötung der Larven auf den Trauben bonitiert.

| Wirkstoff | Aufwandmenge % / l | Abtötung (%) | |
|---|---|---|---|
| | | 16d | 38d |
| Dursban | 0,096 | 72,2 | 64 |
| Beispiel (I-4) | 0,0096 | 94,4 | 91,9 |

### Beispiel 30

Ca 35 cm große Ananaspflanzen der Sorte "MD2" werden in fünf Replikationen gegen Dysmicoccus brevipes behandelt. Die Applikation erfolgt mit einer motorgetriebenen Rückenspritze. Dabei wird der Wirkstoff Beispiel (I-4) (150 OD) gegen den kommerziellen Standard Confidor OD (240 OD) in den angegebenen Aufwandmengen geprüft. Die Wasseraufwandmenge beträgt 4000 l/ha. Beide Wirkstoffe werden mit 500 g a.i./ha Adjuvant NP-7 und 41 a.i./ha Mineralöl als Tankmix gespritzt.

Die Auswertung erfolgt 9, 23 und 37 Tage nach der Behandlung, indem man die Abtötung der Nymphen auf den Pflanzen bonitiert.

| Wirkstoff | Aufwandmenge g a.i./ha | Abtötung (%) | | |
|---|---|---|---|---|
| | | 9Tage | 23 Tage | 37 Tage |
| Confidor OD | 140 | 93.9 | 98.6 | 76.8 |
| Beispiel (I-4) | 75 | 80.9 | 84.0 | 91.3 |

### Beispiel 30a

Je ein Guyabanobäumchen wird in drei Replikationen gegen Dysmicoceus brevipes behandelt. Dabei wird der Wirkstoff Beispiel (I-4) (240 SC) in einer Tankmischung mit 0,1 % Rapsölmethylester (500 EW) in der angegebenen Aufwandmenge gegen den kommerziellen Standard Lorsban (500 EC) in der angegebenen Aufwandmenge geprüft. Die Applikation erfolgt mit einer motorgetriebenen Rückenspritze. Dabei wird jede Pflanze mit Spritzbrühe behandelt.

Die Auswertung erfolgt 3, 7 und 14 Tage nach der Behandlung, indem man die Abtötung in Prozent auf den Früchten bonitiert.

| Wirkstoff | Aufwandmenge (g) a.i./m Kronenhöhe | Abtötung (%) | | |
|---|---|---|---|---|
| | | 3 Tage | 7 Tage | 14 Tage |
| Lorsban | 180 | 78.3 | 94.7 | 100 |
| Beispiel (I-4) | 48 | 89.8 | 100 | 100 |

### Mottenschildläuse (Aleyrodidae)

Weiterhin ganz besonders bevorzugt ist die Bekämpfung folgender Arten aus der Familie der Mottenschildläuse (Aleyrodidae) in folgenden Kulturen:

| | |
|---|---|
| Bemisia tabaci | in Gemüse wie Paprika, Tomaten, Gurken, Kohl z.B. Broccoli, Bohnen, Salat, Auberginen, Zucchini, Kürbisse, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln, in Tabak und in tropischen Kulturen wie z.B. Papayas, Bananen, |
| | |
| Bemisia argentifolii | in Baumwolle, in Gemüse wie Paprika, Tomaten, Gurken, Bohnen, Kürbisgewächse, Auberginen, Zucchini, Kohl, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Bananen, |
| | |
| Trialeurodes vaporariorum | in Gemüse wie Tomate, Paprika, Bohnen, Gurken, Kürbisse, Auberginen, in Beerenfrüchten, in Melonen sowie in Zierpflanzen wie z.B. Rosen, Hibiskus, |
| | |
| Aleurothrixus floccosus | in Zitrus wie Orangen, Mandarinen, Zitronen, Apfelsinen, |
| | |
| Aleurodes citri | in Zitrus wie Orangen, Mandarinen, Zitronen, Grapefruits, Limetten, Kumquats, |
| Aleurodes fragriae | in Beerenfrüchten, wie z.B. Erdbeeren |
| Aleurodes azaleae | in Zierpflanzen, wie z.B. Azaleen |

### Beispiel 31

Je ein Orangenbäumchen der Sorte "Newhall" wird in vier Replikationen gegen aleurodes citri behandelt. Dabei wird der Wirkstoff Beispiel (I-4) (240 SC) in der angegebenen Aufwandmenge gegen den kommerziellen Standard Imidacloprid geprüft. Die Wirkstoffe werden in einer Tankmischung mit 0,5 % a.i. Oliocin (700 EW) mit einer Wasseraufwandmenge von 1500 l/ha appliziert. Die Applikation erfolgt mit einer motorgetriebenen Knapsackspritze.

Die Auswertung erfolgt 7, 14 und 21 Tage nach der Behandlung, indem man die Abtötung der Tiere auf den Blättern bonitiert.

| Wirkstoff | Aufwandmenge g a.i./ha/m Kronenhöhe | Abtötung (%) | | |
|---|---|---|---|---|
| | | 7d | 14d | 21d |
| Imidacloprid | 75 | 98,4 | 99,6 | 99,4 |
| Beispiel (I-4) | 72 | 90,9 | 99,5 | 99,9 |

### Beispiel 32

10 m² große Parzellen mit Gemüsepaprika der Sorte "Italiano" werden in drei Replikationen gegen Bemisia tabaci behandelt. Die Applikation erfolgt mit einer motorgetriebenen Rückenspritze. Dabei werden die Wirkstoffe Beispiel (I-9) (Vergleichsbeispiel, nicht unter den Umfang der Erfindung fallend) (240 SC), Beispiel (I-2) (Vergleichsbeispiel, nicht unter den Umfang der Erfindung fallend) (60 SC) und Beispiel (I-11) (Vergleichsbeispiel, nicht unter den Umfang der Erfindung fallend) (60 SC) und der kommerzielle Standard Imidacloprid (200 SL) in den angegebenen Aufwandmengen ausgebracht. Es erfolgen drei Anwendungen im Abstand von 14 bzw. 15 Tagen mit einer Wasseraufwandmenge von 1000 bzw. 1100 l/ha.

Die Auswertung erfolgt 7, 14 und 22 Tage nach der 2. Behandlung, indem man die Abtötung der Tiere (Larven) an den Blättern bonitiert.

| Wirkstoff | Aufwandmenge % a.i. | Abtötung (%) | | |
|---|---|---|---|---|
| | | 7d | 14d | 22d |
| Imidacloprid | 0,02 | 75,8 | 67,2 | 69,4 |
| Beispiel (I-9) | 0,0144 | 90,4 | 95,1 | 92,6 |
| Beispiel (I-2) | 0,0144 | 84,7 | 92,6 | 85,6 |
| Beispiel (I-11) | 0,0144 | 85,4 | 93,3 | 91,3 |

### Beispiel 33

26 m² große Parzellen mit Gemüsegurken der Sorte "Beta alpha" werden in vier Replikationen gegen Bemisia tabaci behandelt. Die Applikation erfolgt mit einer pressluftgetriebenen Rückenspritze. Dabei wird der Wirkstoff Beispiel (I-4) (240 SC) in einer Tankmischung mit 0,1 % a.i. Rapsölmethylester (500 EW) und der kommerzielle Standard Imidacloprid (200 SC) in den angegebenen Aufwandmengen geprüft. Es erfolgen zwei Anwendungen im Abstand von 10 Tagen. Die Wasseraufwandmenge beträgt 1000 l/ha.

Die Auswertung erfolgt 7, 11 und 21 Tage nach der ersten Behandlung, indem man die Abtötung der Tiere (Nymphen) an den Blättern bonitiert.

| Wirkstoff | Aufwandmenge % a.i. | Abtötung (%) | | |
|---|---|---|---|---|
| | | 7d | 11d | 21d |
| Imidacloprid | 0,144 | 89 | 96 | 96 |
| Beispiel (I-4) | 0,084 | 75 | 87 | 90 |

### Beispiel 34

5 m² große Parzellen mit Tomaten der Sorte "Rio Grande" werden in drei Replikationen gegen Trialeurodes vaporariorum behandelt. Die Applikation erfolgt mit einem motorgetriebenen Rückengerät. Dabei werden die Wirkstoffe Beispiel (I-9) (Vergleichsbeispiel, nicht unter den Umfang der Erfindung fallend) (240 SC) und Beispiel (I-4) (240 SC) und der kommerzielle Standard Imidacloprid (200 SL) in den angegebenen Aufwandmengen geprüft. Die Wasseraufwandmenge beträgt 1000 l/ha. Es erfolgen drei Applikationen im Abstand von 11 bzw. 10 Tagen.

Die Auswertung erfolgt jeweils 7 bzw. 10 Tage nach jeder Behandlung, indem man die Abtötung der Larven an den Blättern bonitiert.

| Wirkstoff | Aufwandmenge % a.i. | | Abtötung (%) | |
|---|---|---|---|---|
| | | 10d nach 1. Beh. | 7d nach 2. Beh. | 10d nach 3. Beh. |
| Imidacloprid | 0,015 | 53,5 | 88,4 | 67,5 |
| Beispiel (I-9) | 0,0144 | 63,3 | 99,6 | 94,3 |
| Beispiel (1-4) | 0,0144 | 81,9 | 100 | 94,3 |

### Beispiel 35

10 m² große Parzellen mit Auberginen der Sorte "F 100" werden in drei Replikationen gegen Bemisia argentifolii behandelt. Die Applikation erfolgt mit einer pressluftbetriebenen Rückenspritze. Dabei werden die Wirkstoffe Beispiel (I-9) (Vergleichsbeispiel, nicht unter den Umfang der Erfindung fallend) (60 SC), Beispiel (I-2) (Vergleichsbeispiel, nicht unter den Umfang der Erfindung fallend) (60 SC) und Beispiel (I-11) (Vergleichsbeispiel, nicht unter den Umfang der Erfindung fallend) (60 SC) und der kommerzielle Standard Imidacloprid (70 WG) in den angegebenen Aufwandmengen geprüft. Es erfolgen drei Anwendungen im Abstand von 7 bzw. 8 Tagen. Die Wasseraufwandmenge beträgt 1000 l/ha.

Die Auswertung erfolgt 7 Tage nach der letzten Behandlung, indem man die Abtötung der Nymphen an den Blättern bonitiert.

| Wirkstoff | Aufwandmenge % a.i. | Abtötung (%) |
|---|---|---|
| | | 7d |
| Imidacloprid | 0,014 | 100 |
| Beispiel (I-9) | 0,0144 | 98 |
| Beispiel (I-2) | 0,0144 | 100 |
| Beispiel (I-11) | 0,0144 | 94 |

### Beispiel 36

Je vier Auberginenpflanzen der Sorte "Ryoma" in drei Replikationen gegen Bemisia argentifolii behandelt. Die Applikation erfolgt mit einer motorbetriebenen Rückenspritze. Dabei werden die Wirkstoffe Beispiel (I-4) und Beispiel (I-8) (Vergleichsbeispiel, nicht unter den Umfang der Erfindung fallend) in einer Tankmischung mit 0,2 % a.i. Rapsölmethylester (500 EW) und der kommerzielle Standard Pymetrozine (25 WP) in den angegebenen Aufwandmengen geprüft. Die Wasseraufwandmenge beträgt 3200 l/ha.

Die Auswertung erfolgt 13, 20 und 27 Tage nach der Behandlung, indem man die Abtötung der Nymphen an den Blättern bonitiert.

| Wirkstoff | Aufwandmenge % a.i. | Abtötung (%) | | |
|---|---|---|---|---|
| | | 13d | 20d | 27d |
| Pymetrozine | 0,0125 | 79 | 74 | 75 |
| Beispiel (I-4) | 0,072 | 99,6 | 100 | 97 |
| Beispiel (I-8) | 0,06 | 99,5 | 99,9 | 97 |

### Beispiel 37

Ca. 39 m² große Parzellen mit Cantaloup-Melonen der Sorte "Western Shipper" werden in vier Replikationen gegen Bemisia argentifolii behandelt. Die Applikation erfolgt mit einer pressluftgetriebenen Rückenspritze. Dabei wird der Wirkstoff Beispiel (I-4) (240 SC) in einer Tankmischung mit 0,2 % a.i. Rapsölmethylester (500 EW) und der kommerzielle Standard Endosulfan (360 EC) in den angegebenen Aufwandmengen geprüft. Es erfolgen zwei Anwendungen im Abstand von 16 Tagen. Die Wasseraufwandmenge beträgt 187 l/ha.

Die Auswertung erfolgt 5, 13, 21 und 29 Tage nach der ersten Behandlung, indem man die Abtötung der Tiere (Nymphen) an den Blättern bonitiert.

| Wirkstoff | Aufwandmenge g a.i./ha | Abtötung (%) | | | |
|---|---|---|---|---|---|
| | | 5d | 13d | 21d | 29d |
| Endosulfon | 1120 | 0 | 100 | 80,8 | 66,7 |
| Beispiel (I-4) | 48 | 100 | 100 | 98,1 | 90,5 |

### Beispiel 38

Ca. 7,5 m² große Parzellen mit Melonen der Sorte "Piel DE Sapo" werden in drei Replikationen gegen Bemisia tabaci behandelt. Die Applikation erfolgt mit einem motorgetriebenen Knapsackspritzgerät. Dabei wird der Wirkstoff Beispiel (I-4) (240 SC) in einer Tankmischung mit 0,1 % a.i. Rapsölmethylester (500 EW) und der kommerzielle Standard Confidor (200 SL) in den angegebenen Aufwandmengen ausgebracht. Es erfolgen zwei Anwendungen im Abstand von 7 Tagen mit einer Wasseraufwandmenge von 233 l/ha.

Die Auswertung erfolgt 7 und 15 Tage nach der 2. Behandlung, indem man die Abtötung der Tiere (Nymphen) an den Blättern bonitiert.

| Wirkstoff | Aufwandmenge g a.i./ha | Abtötung (%) | |
|---|---|---|---|
| | | 7d | 15d |
| Confidor | 100 | 98.8 | 75.7 |
| Beispiel (I-4) | 72 | 85.3 | 95,5 |

### Beispiel 39

Ca. 55 Jahre alte Apfelsinenbäume der Sorte "Amargo" werden in drei Replikationen gegen Aleurothrixus floccosus behandelt. Es erfolgt eine Applikation mit einer motorgetriebenen Rückenspritze. Dabei wird der Wirkstoff Beispiel (I-4) (240 SC) in einer Tankmischung mit 0,1 % a.i. Rapsölmethylester (500 EW) in der angegebenen Aufwandmenge gegen den Standard Juvinal (100 EC) in den angegebenen Mengen bei einmaliger Applikation geprüft. Die Wasseraufwaiidmenge beträgt 2630 l/ha.

Die Auswertung erfolgt 36, 51, 62 und 76 Tage nach der Behandlung, indem man die Abtötung auf den Zweigen bonitiert.

| Wirkstoff | Aufwandmenge % a.i. | Abtötung (%) | | | |
|---|---|---|---|---|---|
| | | 36d | 51d | 62d | 76d |
| Juvinal | 0,005 | 57.8 | 60.7 | 73.1 | 74.0 |
| Beispiel (I-4) | 0,0072 | 81.1 | 81.5 | 92.1 | 92.9 |

### Röhrenläuse (Aphididae)

Außerdem ganz besonders bevorzugt ist die Bekämpfung folgender Arten aus der Familie der Röhrenläuse in folgenden Kulturen:

| | |
|---|---|
| Myzus persicae | in Tabak, in Rüben, in Frucht- und Blattgemüse wie z.B. Paprikas, Tomaten, Auberginen, Kopfsalat, Kartoffeln, in Steinobst wie beispielsweise Pfirsichen, Nektarinen, Pflaumen, Kirschen, Erdbeeren, Melonen, in Zierpflanzen wie z.B. Rosen |
| | |
| Myzus nicotianae | in Tabak |
| | |
| Myzus cerasi | in Steinobst wie beispielsweise Kirschen |
| | |
| Aphis gossypii | in Getreide wie z.B. Weizen, in Kernobst wie z.B. Äpfeln, Birnen, in Steinobst wie z.B. Pfirsichen, Nektarinen, Kirschen, Pflaumen, Zwetschgen, Aprikosen, in Zitrus wie z.B. Orangen, Mandarinen, Grapefruits, Kürbissen, Melonen, Erdbeeren, Raps, Kartoffeln, Rüben, in Zierpflanzen wie z.B. Rosen |
| | |
| Aphis pomi | in Kernobst wie z.B. Äpfeln, Birnen |
| | |
| Dysaphis plantaginea | in Kernobst, wie z.B. Äpfeln, Birnen |
| | |
| Dysaphis piri | in Kernobst, wie z.B. Äpfeln, Birnen |
| | |
| Aphis fabae | in Rüben und Bohnen |
| Rhodobium porosum | in Erdbeeren |
| Nasonovia ribisnigri | in Blattgemüse wie beispielsweise Kopfsalat |
| Macrosiphum rosae | in Zierpflanzen wie z.B. Rosen |
| Macrosiphum euphorbiae | in Blatt-, Frucht- und Kohlgemüse wie z.B. Auberginen, Salat, Paprika, Weißkohl, Erdbeeren |
| | |
| Phorodon humuli | in Hopfen |
| Brachycaudus helycrisii | in Steinobst, wie z.B. in Pflaumen, Zwetschgen |
| Aulacorthum solani | in Zitrus wie z.B. Orangen, Mandarinen, Grapefruits, Limetten, in Frucht- und Blattgemüse wie z.B. Kopfsalat, Tomaten, Paprika, Auberginen |
| | |
| Toxoptera citricola | in Zitrus, wie z.B. Orangen, Mandarinen, Limetten, Grapefruits, in Steinobst wie z.B. Pfirsichen, Aprikosen |
| | |
| Toxoptera citricida | in Zitrus, wie z.B. Orangen, Mandarinen, Limetten, Grapefruits, in Steinobst wie z.B. Pfirsichen, Aprikosen |
| | |
| Toxoptera aurantii | in Zitrus wie z.B. Orangen, Mandarinen, Grapefruits, Limetten, in Gewürzen wie z.B. Pfeffer, in Nüssen wie z.B. Cashewnüssen |
| | |
| Toxoptera odinae | in Zitrus wie z.B. Orangen, Mandarinen, Grapefruits, Limetten, in Gewürzen wie z.B. Pfeffer, in Nüssen wie z.B. Cashewnüssen |
| | |
| Toxoptera graminum | in Getreide wie z.B. Weizen, Triticale, Sorghum |

### Beispiel 40

Drei etwa 22 Jahre alte Apfelbäume der Sorte "Golden Delicious" werden in drei Replikationen gegen Dysaphis plantaginea und Aphis pomi eradikativ behandelt. Die Applikation wird mit einem motorgetriebenen Karrenspritzgerät durchgeführt. Dabei werden die Wirkstoffe Beispiel (I-9) (Vergleichsbeispiel, nicht unter den Umfang der Erfindung fallend) (240 SC) und Beispiel (I-4) (240 SC) in der angegebenen Menge gegen den kommerziellen Standard Imidacloprid (200 SL) in der angegebenen Aufwandmenge geprüft. Die Wasseraufwandmenge beträgt 1200 l/ha.

Die Auswertung erfolgt 14 d und 21 d nach der Behandlung, indem man die Abtötung der Population auf den Trieben bonitiert.

### Dysaphis plantaginea

| Wirkstoff | Aufwandmenge (%) a.i. | Abtötung (%) | |
|---|---|---|---|
| | | 14d | 21d |
| Imidacloprid | 0,007 | 97,6 | 99,8 |
| Beispiel (I-9) | 0,0144 | 99,8 | 100 |
| Beispiel (I-4) | 0,0144 | 99,3 | 100 |

### Aphis pomi

| Wirkstoff | Aufwandmenge (%) a.i. | Abtötung (%) | |
|---|---|---|---|
| | | 14d | 21d |
| Imidacloprid | 0,007 | 93,6 | 92,5 |
| Beispiel (I-9) | 0,0144 | 98,5 | 97,3 |
| Beispiel (I-4) | 0,0144 | 96,9 | 98,8 |

### Beispiel 41

Drei etwa 8 Jahre alte Apfelbäume der Sorte "Golden Delicious" werden in drei Replikationen gegen Dysaphis plantaginea und Aphis pomi eradikativ behandelt. Die Applikation wird mit einem motorgetriebenen Karrenspritzgerät durchgeführt. Dabei werden die Wirkstoffe Beispiel (I-9) (Vergleichsbeispiel, nicht unter den Umfang der Erfindung fallend) (240 SC) und Beispiel (I-2) (Vergleichsbeispiel, nicht unter den Umfang der Erfindung fallend) (240 SC) in der angegebenen Menge gegen den kommerziellen Standard Imidacloprid (200 SL) in der angegebenen Aufwandmenge geprüft. Die Wasseraufwandmenge beträgt 1200 l/ha.

Die Auswertung erfolgt vor sowie 7 d und 14 d nach der Behandlung durch Zählen der lebenden Tiere auf den Trieben. Anschließend wird der Wirkungsgrad, indem man die Wirkung auf die Population in Prozent nach Henderson und Tilton berechnet.

### Dysaphis plantaginea

| Wirkstoff | Aufwandmenge (%) a.i. | Wirkung (%) | |
|---|---|---|---|
| | | 7d | 14d |
| Imidacloprid | 0,007 | 99,6 | 99,5 |
| Beispiel (I-9) | 0,0144 | 92,1 | 99,4 |
| Beispiel (I-2) | 0,0144 | 92,3 | 99,2 |

### Aphis pomi

| Wirkstoff | Aufwandmenge (%) a.i. | Wirkung (%) | |
|---|---|---|---|
| | | 7d | 14d |
| Imidacloprid | 0,007 | 99 | 83,5 |
| Beispiel (I-9) | 0,0144 | 93 | 93,5 |
| Beispiel (I-2) | 0,0144 | 99,1 | 97,1 |

### Beispiele 42

5 m² große Parzellen mit Kopfsalat werden zwei Wochen nach der Verpflanzung in vier Replikationen gegen Nasonovia ribisnigri behandelt. Die Applikation erfolgt mit einer pressluftbetriebenen Rückenspritze. Dabei werden die Wirkstoffe Beispiel (I-4) (240SC) und Beispiel (I-8) (Vergleichsbeispiel, nicht unter den Umfang der Erfindung fallend) (240 SC) in einer Tankmischung mit 0.2 % a.i. Rapsölmethylester (500 EW) gegen den kommerziellen Standard Pirimor in den angegebenen Aufwandmengen geprüft. Die Wasseraufwandmenge beträgt 500 l/ha.

Die Auswertung erfolgt 7, 14 und 26 Tage nach der Behandlung, indem man die Abtötung der Tiere auf den Pflanzen bonitiert.

| Wirkstoff | Aufwandmenge g a.i. / ha | Abtötung (%) | | |
|---|---|---|---|---|
| | | 7d | 14d | 26d |
| Pirimor | 150 | 69,2 | 53,2 | 46,3 |
| Beispiel (I-4) | 48 | 92,3 | 95,7 | 95,1 |
| Beispiel (I-8) | 42 | 80,8 | 93,6 | 92,7 |

### Beispiel 43

10 m² große Parzellen mit Auberginen der Sorte "F 100" werden in drei Replikationen gegen Macrosiphum euphorbiae behandelt. Die Applikation erfolgt mit einer pressluftbetriebenen Rückenspritze. Dabei werden die Wirkstoffe Beispiel (I-9) (Vergleichsbeispiel, nicht unter den Umfang der Erfindung fallend) (60 SC), Beispiel (I-2) (Vergleichsbeispiel, nicht unter den Umfang der Erfindung fallend) (60 SC) und Beispiel (I-11) (Vergleichsbeispiel, nicht unter den Umfang der Erfindung fallend) (60 SC) und der kommerzielle Standard Imidacloprid (70 WG) in den angegebenen Aufwandmengen geprüft. Es erfolgen drei Anwendungen im Abstand von 7 bzw. 8 Tagen. Die Wasseraufwandmenge beträgt 1000 l/ha.

Die Auswertung erfolgt 7 und 14 Tage nach der zweiten Behandlung, indem man die Abtötung der Nymphen an den Blättern bonitiert.

| Wirkstoff | Aufwandmenge (%) a.i. | Abtötung (%) | |
|---|---|---|---|
| | | 7d | 14d |
| Imidacloprid | 0,014 | 100 | 100 |
| Beispiel (I-9) | 0,0144 | 99 | 98 |
| Beispiel (I-2) | 0,0144 | 99 | 91 |
| Beispiel (I-11) | 0,0144 | 98 | 99 |

Ganz besonders bevorzugt ist die Bekämpfung von Phorodon humuli in Hopfen.

### Beispiel 44

Etwa 4 Jahre alte Hopfenpflanzen der Sorte "Spalter" werden in zwei Replikationen gegen die Hopfenblattlaus Phorodon humuli behandelt. Die Applikation erfolgt mit einer pressluftbetriebenen Rückenspritze. Dabei werden die Wirkstoffe Beispiel (I-9) (Vergleichsbeispiel, nicht unter den Umfang der Erfindung fallend) (240SC) und Beispiel (I-4) (240 SC) in einer Tankmischung mit 0,1 % a.i. Rapsölmethylester (500 EW) und der Standard Imidacloprid in den angegebenen Aufwandmengen appliziert. Die Wasseraufwandmenge beträgt 1200 l/ha.

Die erste Auswertung erfolgt 6 Tage und die letzte Auswertung 46 Tage nach der Behandlung, indem man die Abtötung der Tiere auf den Blättern bonitiert.

| Wirkstoff | Aufwandmenge (%) a.i. | Abtötung (%) | |
|---|---|---|---|
| | | 6d | 46d |
| Imidacloprid | 0,0053 | 99 | 97,6 |
| Beispiel (I-9) | 0,0036 | 95 | 85,2 |
| Beispiel (I-4) | 0,0084 | 95 | 98,7 |

### Beispiel 45

Je ein ca. 8 Jahre alter Apfelsinenbaum der Sorte "Navel" wird in drei Replikationen gegen Toxoptera citricida behandelt. Dabei werden die Wirkstoffe Beispiel (I-9) (Vergleichsbeispiel, nicht unter den Umfang der Erfindung fallend) (240 SC) und Beispiel (I-4) (240 SC) in einer Tankmischung mit 0,1 % a.i. Marlipal gegen den kommerziellen Standard Imidacloprid (350 SC) in den angegebenen Aufwandmengen geprüft. Die Applikation erfolgt mit einer motorbetriebenen Rückenspritze, wobei die Wasseraufwandmenge 6,7 l/Pflanze beträgt.

Die Auswertung erfolgt 6 und 20 Tage nach der Behandlung, indem man die Abtötung der Tiere auf den Blättern bonitiert.

| Wirkstoff | Aufwandmenge (%) a.i. | Abtötung (%) | |
|---|---|---|---|
| | | 6d | 20d |
| Imidacloprid | 0,0125 | 99 | 94 |
| Beispiel (I-9) | 0,0144 | 96 | 97 |
| Beispiel (I-4) | 0,0144 | 97 | 97 |

### Beispiel 46

Ca. 33 m² große Parzellen mit Kopfsalat der Sorte "PIC 714" werden in vier Replikationen gegen Aulacorthum solani, Macrosiphum euphorbiae und Myzus persicae behandelt. Die Applikation erfolgt mit einer Traktorspritze. Dabei wird der Wirkstoff Beispiel (I-4) (240 SC) in einer Tankmischung mit 0.2 % a.i. Rapsölmethylester (500 EW) gegen den kommerziellen Standard Endosulfan (360 EC) in den angegebenen Aufwandmengen geprüft. Die Wasseraufwandmenge beträgt 187 l/ha. Es erfolgen zwei Behandlungen im Abstand von 22 Tagen.

Die Auswertung erfolgt 8, 22, 30 und 40 Tage nach der ersten Behandlung, indem man die Abtötung der Nymphen auf den Pflanzen bonitiert.

### Aulacorthum solani

| Wirkstoff | Aufwandmenge g a.i. / ha | Abtötung (%) | | | |
|---|---|---|---|---|---|
| | | 8d | 22d | 30d | 40d |
| Endosulfan | 1120 | 96 | 88 | 98 | 53 |
| Beispiel (I-4) | 48 | 100 | 99 | 79 | 87 |

### Macrosiphum euphorbiae

| Wirkstoff | Aufwandmenge g a.i. / ha | Abtötung (%) | | | |
|---|---|---|---|---|---|
| | | 8d | 22d | 30d | 40d |
| Endosulfan | 1120 | 100 | 100 | 99 | 96 |
| Beispiel (I-4) | 48 | 95 | 100 | 100 | 96 |

### Myzus persicae

| Wirkstoff | Aufwandmenge g a.i. / ha | Abtötung (%) | | | |
|---|---|---|---|---|---|
| | | 8d | 22d | 30d | 40d |
| Endosulfan | 1120 | 95 | 61 | 100 | - * |
| Beispiel (I-4) | 48 | 95 | 100 | 88 | - * |

| | | | | | |
|---|---|---|---|---|---|
| * keine Tiere in der Kontrolle | | | | | |

### Beispiel 47

Etwa 18 Jahre alte Pfirsichbäume der Sorte "Vivian", die mit Myzus persicae befallen sind, werden in drei Replikationen unter Praxisbedingungen mit Beispiel (I-4) (240 SC) in einer Tankmischung mit 0,2 % a.i. Rapsölmethylester (500 EW) im Vergleich zu dem kommerziellen Standard Imidacloprid 200 SL in den angegebenen Aufwandmengen behandelt. Die Applikation erfolgt mit einer motorgetriebenen Rückenspritze. Die Wasseraufwandmenge beträgt 1000 l/ha.

Die Auswertung erfolgt 7, 14 und 21 Tage nach der Anwendung durch Zählen der lebenden Tiere auf den Trieben. Anschließend wird der Wirkungsgrad, indem man die Wirkung auf die Population in Prozent nach Henderson und Tilten, berechnet.

| Wirkstoff | Aufwandmenge a.i. in g/ha/m Kronenhöhe | Wirkung (%) | | |
|---|---|---|---|---|
| | | 7d | 14d | 21d |
| Imidacloprid | 25 | 97,6 | 95,8 | 78,1 |
| Beispiel (I-4) | 24 | 94,0 | 98,9 | 93,3 |

### Beispiel 48

Vier Auberginenpflanzen (ca. 7 Monate alt) der Sorte "Hayabusa" werden in drei Replikationen gegen Myzus persicae behandelt. Die Applikation erfolgt mit einer motorbetriebenen Rückenspritze. Dabei wird der Wirkstoff Beispiel (I-4) (240 SC) in einer Tankmischung mit 0,1. % a.i. Rapsölmethylester (500 EW) und der kommerzielle Standard Pymethrozin (25 WP) in den angegebenen Aufwandmengen geprüft. Die Wasseraufwandmenge beträgt 3000 l/ha.

Die Auswertung erfolgt 7, 14, 21 und 29 Tage nach der Behandlung, indem man die Abtötung der Tiere an den Blättern bonitiert.

| Wirkstoff | Aufwandmenge g a.i. / ha | Abtötung (%) | | | |
|---|---|---|---|---|---|
| | | 7d | 14d | 21d | 29d |
| Pymethrozin | 0,0125 | 99,9 | 99 | 95 | 73 |
| Beispiel (I-4) | 0,024 | 99,7 | 99,7 | 98 | 97 |

### Beispiel 49

Ca. 7,5 m² große Parzellen mit Kartoffeln der Sorte "BP 1" werden in vier Replikationen gegen Myzus persicae behandelt. Die Applikation erfolgt mit einer pressluftgetriebenen Rückenspritze. Dabei wird der Wirkstoff Beispiel (1-4) (240 SC) in einer Tankmischung mit 0,2 % a.i. Rapsölmethylester (500 EW) und der kommerzielle Standard Tamaron (585 SL) in den angegebenen Aufwandmengen geprüft. Es erfolgen zwei Anwendungen im Abstand von 7 Tagen. Die Wasseraufwandmenge beträgt 500 l/ha.

Die Auswertung erfolgt 7 und 13 Tage nach der ersten Behandlung durch Zählen der lebenden Tiere (Nymphen) an den Blättern. Anschließend wird der Wirkungsgrad, indem man die Wirkung auf die Population in Prozent nach Henderson und Tilten, berechnet.

| Wirkstoff | Aufwandmenge g a.i./ha | Wirkung(%) | |
|---|---|---|---|
| | | 7d | 13d |
| Tamaron | 585 | 100 | 100 |
| Beispiel (I-4) | 48 | 67 | 100 |

### Beispiel 50

Ca. 43 m² große Parzellen mit Tomaten der Sorte "Yaqui" werden in zwei Replikationen gegen Myzus persicae behandelt. Die Applikation erfolgt mit einer motorbetriebenen Rückenspritze. Dabei werden die Wirkstoffe Beispiel (I-9) (Vergleichsbeispiel, nicht unter den Umfang der Erfindung fallend) (240 SC) und Beispiel (I-4) (240 SC) in einer Tankmischung mit 0,1 % a.i. Rapsölmethylester (500 EW) und der Standard Acetamiprid (20 WP) in den angegebenen Aufwandmengen appliziert. Die Wasseraufwandmenge beträgt 208 l/ha.

Die Auswertung erfolgt 3 und 10 Tage nach der Behandlung, indem man die Abtötung der Nymphen auf den Blättern bonitiert.

| Wirkstoff | Aufwandmenge g a.i./ha | Abtötung (%) | |
|---|---|---|---|
| | | 3d | 10d |
| Acetamiprid | 50 | 78,7 | 73,5 |
| Beispiel (I-9) | 36 | 87,5 | 95,9 |
| Beispiel (I-4) | 48 | 92,6 | 95,9 |

### Beispiel 51

10 m² große Parzellen mit Ackerbohnen der Sorte "Frühe Weisskeimige" werden in drei Replikationen gegen Aphis fabae behandelt. Die Applikation erfolgt mit einer pressluftbetriebenen Rückenspritze. Dabei werden die Wirkstoffe Beispiel (I-9) (Vergleichsbeispiel, nicht unter den Umfang der Erfindung fallend) (240 SC), Beispiel (I-2) (Vergleichsbeispiel, nicht unter den Umfang der Erfindung fallend) (240 SC) und Beispiel (I-4) (240 SC) in einer Tankmischung mit 0,2 % Rapsölmethylester (500 EW) und der kommerzielle Standard Pirimor (50 WG) in den angegebenen Aufwandmengen geprüft. Es erfolgt eine Anwendung. Die Wasseraufwandmenge beträgt 500 l/ha.

Die Auswertung erfolgt 7 und 15 Tage nach der Behandlung, indem man die Abtötung der Nymphen an den Blättern bonitiert.

| Wirkstoff | Aufwandmenge g a.i./ha | Abtötung (%) | |
|---|---|---|---|
| - | | 7d | 15d |
| Pirimor | 250 | 100 | 100 |
| Beispiel (I-9) | 36 | 99,7 | 100 |
| Beispiel (I-2) | 36 | 98,6 | 100 |
| Beispiel (I-4) | 42 | 100 | 100 |

### Beispiel 52

15 m² große Parzellen mit Melonen werden in drei Replikationen gegen Aphis gossypii behandelt. Die Applikation erfolgt mit einer pressluftbetriebenen Rückenspritze. Dabei wird der Wirkstoff Beispiel (I-4) (240 SC) in einer Tankmischung mit 0,1 % a.i. Rapsölmethylester (500 EW) und der Standard Imidacloprid (200 SL)in den angegebenen Aufwandmengen appliziert. Die Wasseraufwandmenge beträgt 500 l/ha.

Die Auswertung erfolgt 3 Tage und 7 Tage nach der Behandlung, indem man die Abtötung der Tiere auf den Trieben bonitiert.

| Wirkstoff | Aufwandmenge g a.i./ha | Abtötung (%) | |
|---|---|---|---|
| | | 3d | 7d |
| Imidacloprid | 100 | 98,2 | 100 |
| Beispiel (I-4) | 48 | 94,7 | 100 |

### Beispiel 53

Ca 2,8 m hohe Pflaumenbäume der Sorte "Angeleno" werden in vier Replikationen gegen Myzus persicae behandelt. Die Applikation wird mit einer Hochdruckspritze durchgeführt. Dabei wird der Wirkstoff Beispiel (I-4) (100 OD) in der angegebenen Menge gegen den kommerziellen Standard Actara (25 WG) in der angegebenen Aufwandmenge geprüft. Die Wasseraufwandmenge beträgt 500 l/ha/m Kronenhöhe.

Die Auswertung erfolgt 6, 9, 12, 20 Tage nach der Behandlung, indem man die Abtötung der Population auf den Trieben bonitiert.

| Wirkstoff | Aufwandmenge g a.i. / ha/m Kronenhöhe | Abtötung (%) | | | | |
|---|---|---|---|---|---|---|
| | | 6d | 9d | 12d | 20d | 27d |
| Actara | 33.5 | 96,7 | 96.6 | 86.9 | 88.4 | 89.2 |
| Beispiel (I-4) | 48 | 96,4 | 99,7 | 99.8 | 99.9. | 99.9 |

### Beispiel 54

Ca. 8,4 m² große Parzellen mit etwa 36 11 Wochen alten Paprikapflanzen der Sorte "Casea dura ikeda" werden in vier Replikationen gegen Myzus persicae behandelt. Die Applikation erfolgt mit einer pressluftbetriebenen Rückenspritze. Dabei wird der Wirkstoff Beispiel (I-4) (240SC) in einer Tankmischung mit 0.2 % a.i. Rapsölmethylester (500 EW) gegen den kommerziellen Standard Provado (200 SC) in den angegebenen Aufwandmengen geprüft. Die Wasseraufwandmenge beträgt 600 l/ha. Es wird dreimal jeweils im Abstand von 7 d appliziert.

Die Auswertung erfolgt 1, 7, und 14 Tage nach der letzten Behandlung, indem man die Abtötung der Tiere auf den Blättern bonitiert.

| Wirkstoff | Aufwandmenge g a.i. / ha | Abtötung (%) | | |
|---|---|---|---|---|
| | | 1d | 7d | 14d |
| Provado | 50 | 99,7 | 100 | 98,7 |
| Beispiel (I-4) | 48 | 99,1 | 98,5 | 100 |

### Beispiel 55

Ca 3 m² große Parzellen mit 3 Wochen alten Erdbeerpflanzen werden in vier Replikationen gegen Macrosiphum euphorbiae und Rhodobium porosum behandelt. Die Applikation erfolgt mit einer pressluftbetriebenen Rückenspritze. Dabei wird der Wirkstoff Beispiel (I-4) (150 OD) und der kommerzielle Standard Calypso (480 SC) in den angegebenen Aufwandmengen geprüft. Dabei wird der Standard als Tankmischung mit 0,03 % Motto (Adjuwant) gespritzt Die Wasseraufwandmenge beträgt 500 l/ha.

Die Auswertung erfolgt 7 und 14 Tage nach der zweiten Behandlung, indem man die Abtötung der Nymphen an den Pflanzen bonitiert.

| Wirkstoff | Aufwandmenge g a.i. / ha | Rhodobium porosum Abtötung (%) | | Macrosiphum euphorbiae Abtötung (%) | |
|---|---|---|---|---|---|
| | | 7d | 14d | 7d | 14d |
| Calypso | 120 | 99 | 98 | 67.7 | 96 |
| Beispiel (I-4) | 75 | 97 | 96 | 62.2 | 94 |

## Patentansprüche

1. Verwendung der Verbindung der Formel (I) 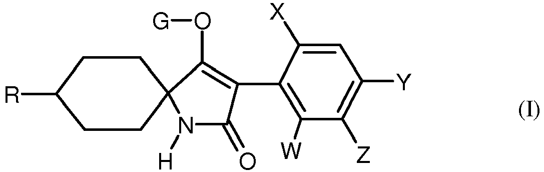 wobei die Substituenten W, X, Y, Z, R und G die in der Tabelle aufgeführten Definitionen haben:
| **W** | **X** | **Y** | Z | **R** | **G** |
|---|---|---|---|---|---|
| | | | | | |
| | | | | | |
| | | | | | |
| H | CH₃ | H | CH₃ | OCH₃ | CO₂-C₂H₅ |
| | | | | | |
| | | | | | |
| | | | | | |
| | | | | | |
| | | | | | |
| | | | | | |
| | | | | | |
| | | | | | |
| | | | | | |
in Form ihrer Isomerengemische oder reinen Isomeren zur Bekämpfung von Insekten aus der Unterordnung der Pflanzenläuse (Sternorrhyncha).

2. Verwendung von Verbindungen der Formel (I) gemäß Anspruch 1 zur Bekämpfung von Insekten aus der Familie der Blasenläuse (Pemphigidae).

3. Verwendung von Verbindungen der Formel (I) gemäß Anspruch 1 zur Bekämpfung von Insekten aus der Familie der Wurzelläuse (Phylloxeridae).

4. Verwendung von Verbindungen der Formel (I) gemäß Anspruch 1 zur Bekämpfung von Insekten aus der Familie der Blattflöhe (Psyllidae).

5. Verwendung von Verbindungen der Formel (I) gemäß Anspruch 1 zur Bekämpfung von Insekten aus der Familie der Napfschildläuse (Coccidae).

6. Verwendung von Verbindungen der Formel (I) gemäß Anspruch 1 zur Bekämpfung von Insekten aus der Familie der Deckelschildläuse (Diaspididae).

7. Verwendung von Verbindungen der Formel (I) gemäß Anspruch 1 zur Bekämpfung von Insekten aus der Familie der Röhrenschildläuse (Ortheziidae).

8. Verwendung von Verbindungen der Formel (I) gemäß Anspruch 1 zur Bekämpfung von Insekten aus der Familie der Schmier- und Wollläuse (Pseudococcidae).

9. Verwendung von Verbindungen der Formel (I) gemäß Anspruch 1 zur Bekämpfung von Insekten aus der Familie der Mottenschildläuse (Aleyrodidae), ausgenommen der Verwendung der Verbindungen der Formel (I) gemäß Anspruch 1 zur Bekämpfung von Mottenschildläusen Bemisia tabaci (Aleyrodidae) an Baumwolle.

10. Verwendung von Verbindungen der Formel (I) gemäß Anspruch 1 zur Bekämpfung von Myzus spp. in Tabak, Getreide, Steinobst, Beerenfrüchten, Fruchtgemüse, Blattgemüse, Knollen- und Wurzelgemüse, Melonen, Kartoffeln, Rüben, Raps, Zierpflanzen.

11. Verwendung von Verbindungen der Formel (I) gemäß Anspruch 1 zur Bekämpfung von Aphis spp. in Tabak, Zitrus, Kernobst, Steinobst, Getreide, Melonen, Rüben, Beerenfrüchten, Raps, Fruchtgemüse, Blattgemüse, Kohlgemüse, Knollen- und Wurzelgemüse, Zierpflanzen, Kartoffeln, Kürbisse.

12. Verwendung von Verbindungen der Formel (I) gemäß Anspruch 1 zur Bekämpfung von Rhodobium porosum in Erdbeeren.

13. Verwendung von Verbindungen der Formel (I) gemäß Anspruch 1 zur Bekämpfung von Nasonovia ribisnigri in Blattgemüse.

14. Verwendung von Verbindungen der Formel (I) gemäß Anspruch 1 zur Bekämpfung von Dysaphis spp. in Kernobst.

15. Verwendung von Verbindungen der Formel (I) gemäß Anspruch 1 zur Bekämpfung von Macrosiphum spp. in Zierpflanzen, Getreide, Kartoffeln, Blatt-, Kohl- und Fruchtgemüse, Erdbeeren.

16. Verwendung von Verbindungen der Formel (I) gemäß Anspruch 1 zur Bekämpfung von Rhopalosiphum padi" Sitobion avenae, Methopolophium dirhodum, Brachycolus noxius in Getreide.

17. Verwendung von Verbindungen der Formel (I) gemäß Anspruch 1 zur Bekämpfung von Phorodon humuli in Hopfen.

18. Verwendung von Verbindungen der Formel (I) gemäß Anspruch 1 zur Bekämpfung von Brachycaudus helychrisii in Steinobst.

19. Verwendung von Verbindungen der Formel (I) gemäß Anspruch 1 zur Bekämpfung von Toxoptera spp.in Zitrus, Steinobst, Mandeln, Nüssen, Getreide, Gewürzen.

20. Verwendung von Verbindungen der Formel (I) gemäß Anspruch 1 zur Bekämpfung von Aulacorthum spp. in Zitrus, Kartoffeln, Frucht- und Blattgemüse.

## Claims

1. Use of the compound of the formula (I) 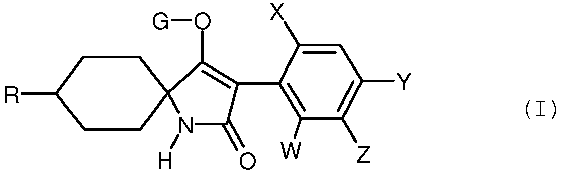 where the substituents W, X, Y, Z, R and G are as defined in the table:
| **W** | **X** | **Y** | **Z** | **R** | **G** |
|---|---|---|---|---|---|
| | | | | | |
| | | | | | |
| | | | | | |
| H | CH₃ | H | CH₃ | CH₃ | CO₂-C₂H₅ |
| | | | | | |
| | | | | | |
| | | | | | |
| | | | | | |
| | | | | | |
| | | | | | |
| | | | | | |
| | | | | | |
| | | | | | |
in the form of its isomer mixtures or pure isomers for controlling insects from the suborder of the plant lice (Sternorrhyncha).

2. Use of compounds of the formula (I) according to Claim 1 for controlling insects from the family of the gall-making aphids (Pemphigidae).

3. Use of compounds of the formula (I) according to Claim 1 for controlling insects from the family of the phylloxerans (Phylloxeridae).

4. Use of compounds of the formula (I) according to Claim 1 for controlling insects from the family of the jumping plant lice (Psyllidae).

5. Use of compounds of the formula (I) according to Claim 1 for controlling insects from the family of the soft scales (Coccidae).

6. Use of compounds of the formula (I) according to Claim 1 for controlling insects from the family of the armoured scales (Diaspididae).

7. Use of compounds of the formula (I) according to Claim 1 for controlling insects from the family of the ensign coccids (Ortheziidae).

8. Use of compounds of the formula (I) according to Claim 1 for controlling insects from the family of the mealy bugs (Pseudococcidae).

9. Use of compounds of the formula (I) according to Claim 1 for controlling insects from the family of the whiteflies (Aleyrodidae), except for the use of the compounds of the formula (I) according to Claim 1 for controlling the whiteflies Bemisia tabaci (Aleyrodidae) on cotton.

10. Use of compounds of the formula (I) according to Claim 1 for controlling Myzus spp. in tobacco, cereals, stone fruit, soft fruit, fruit vegetables, leafy vegetables, tuber and root vegetables, melons, potatoes, beet, oilseed rape, ornamental plants.

11. Use of the compounds of the formula (I) according to Claim 1 for controlling Aphis spp. in tobacco, citrus fruit, pomme fruit, stone fruit, cereals, melons, beet, soft fruit, oilseed rape, fruit vegetables, leafy vegetables, brassica vegetables, tuber and root vegetables, ornamental plants, potatoes, cucurbits.

12. Use of compounds of the formula (I) according to Claim 1 for controlling Rhodobium porosum in strawberries.

13. Use of compounds of the formula (I) according to Claim 1 for controlling Nasonovia ribisnigri in leafy vegetables.

14. Use of compounds of the formula (I) according to Claim 1 for controlling Dysaphis spp. in pomme fruit.

15. Use of compounds of the formula (I) according to Claim 1 for controlling Macrosiphum spp. in ornamental plants, cereals, potatoes, leafy vegetables, brassica vegetables and fruit vegetables, strawberries.

16. Use of compounds of the formula (I) according to Claim 1 for controlling Rhopalosiphum padi" Sitobion avenae, Methopolophium dirhodum, Brachycolus noxius in cereals.

17. Use of compounds of the formula (I) according to Claim 1 for controlling Phorodon humuli in hops.

18. Use of compounds of the formula (I) according to Claim 1 for controlling Brachycaudus helychrisii in stone fruit.

19. Use of compounds of the formula (I) according to Claim 1 for controlling Toxoptera spp. in citrus fruit, stone fruit, almonds, nuts, cereals, spices.

20. Use of compounds of the formula (I) according to Claim 1 for controlling Aulacorthum spp. in citrus fruit, potatoes, fruit vegetables and leafy vegetables.

## Revendications

1. Utilisation du composé de formule (I) 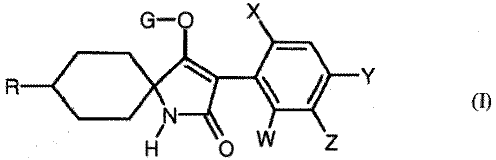 dans laquelle les substituants W, X, Y, Z, R et G ont les définitions indiquées dans le tableau :
| **W** | **X** | **Y** | **Z** | **R** | **G** |
|---|---|---|---|---|---|
| | | | | | |
| | | | | | |
| | | | | | |
| H | CH₃ | H | CH₃ | OCH₃ | CO₂-C₂H₅ |
| | | | | | |
| | | | | | |
| | | | | | |
| | | | | | |
| | | | | | |
| | | | | | |
| | | | | | |
| | | | | | |
| | | | | | |
sous la forme de leurs mélanges d'isomères ou d'isomères purs pour lutter contre les insectes du sous-ordre des poux des plantes (Sternorrhyncha).

2. Utilisation de composés de formule (I) selon la revendication 1 pour lutter contre les insectes de la famille des pucerons lanigères (Pemphigidae).

3. Utilisation de composés de formule (I) selon la revendication 1 pour lutter contre les insectes de la famille des pucerons des racines (Phylloxeridae).

4. Utilisation de composés de formule (I) selon la revendication 1 pour lutter contre les insectes de la famille des psylles (Psyllidae).

5. Utilisation de composés de formule (I) selon la revendication 1 pour lutter contre les insectes de la famille des cochenilles pulvinaires (Coccidae).

6. Utilisation de composés de formule (I) selon la revendication 1 pour lutter contre les insectes de la famille des cochenilles diaspines (Diaspididae).

7. Utilisation de composés de formule (I) selon la revendication 1 pour lutter contre les insectes de la famille des cochenilles du genre *Orthezia* (Ortheziidae).

8. Utilisation de composés de formule (I) selon la revendication 1 pour lutter contre les insectes de la famille des cochenilles farineuses (Pseudococcidae).

9. Utilisation de composés de formule (I) selon la revendication 1 pour lutter contre les insectes de la famille des aleurodes des serres (Aleyrodidae), à l'exclusion de l'utilisation des composés de formule (I) selon la revendication 1 pour lutter contre les aleurodes des serres Bemisia tabaci (Aleyrodidae) sur le coton.

10. Utilisation de composés de formule (I) selon la revendication 1 pour lutter contre Myzus spp. dans le tabac, les céréales, les fruits à noyau, les fruits à baies, les légumes-fruits, les légumes-feuilles, les légumes-tubercules et racines, les melons, les pommes de terre, les betteraves, le colza, les plantes ornementales.

11. Utilisation de composés de formule (I) selon la revendication 1 pour lutter contre Aphis spp. dans le tabac, les agrumes, les fruits à pépins, les fruits à noyau, les céréales, les melons, les betteraves, les fruits à baies, le colza, les légumes-fruits, les légumes-feuilles, les brassicées, les légumes-tubercules et racines, les plantes ornementales, les pommes de terre, les courges.

12. Utilisation de composés de formule (I) selon la revendication 1 pour lutter contre Rhobodium porosum dans les fraises.

13. Utilisation de composés de formule (I) selon la revendication 1 pour lutter contre Nasonovia ribisnigri dans les légumes-feuilles.

14. Utilisation de composés de formule (I) selon la revendication 1 pour lutter contre Dysaphis spp. dans les fruits à pépins.

15. Utilisation de composés de formule (I) selon la revendication 1 pour lutter contre Macrosiphum spp. dans les plantes ornementales, les céréales, les pommes de terre, les légumes-feuilles, les brassicées et les légumes-fruits, les fraises.

16. Utilisation de composés de formule (I) selon la revendication 1 pour lutter contre Rhopalosiphum padi., Sitobion avenae, Methopolophium dirhodum, Brachycolus noxius dans les céréales.

17. Utilisation de composés de formule (I) selon la revendication 1 pour lutter contre Phorodon humuli dans le houblon.

18. Utilisation de composés de formule (I) selon la revendication 1 pour lutter contre Brachycaudus helychrisii dans les fruits à noyau.

19. Utilisation de composés de formule (I) selon la revendication 1 pour lutter contre Toxoptera spp. dans les agrumes, les fruits à noyau, les amandes, les noix, les céréales, les épices.

20. Utilisation de composés de formule (I) selon la revendication 1 pour lutter contre Aulacorthum spp. dans les agrumes, les pommes de terre, les légumes-fruits et feuilles.
